# EUROPEAN PATENT APPLICATION

(11) **EP 4 759 700 A1**
(43) Date of publication of application: **17.06.2026**
(21) Application number: 23951895.4
(22) Date of filing: 15.09.2023
(51) Int. Cl.: B63H 20/08, G06F 3/0481

(54) **CONTROL METHOD, DISPLAY APPARATUS, AQUATIC PROPULSION SYSTEM, DEVICE, AND STORAGE MEDIUM**

(71) Applicant: Shenzhen Epropulsion Technology Limited, Shenzhen, Guangdong 518063 (CN)
(72) Inventor: ZHU, Yuan, Shenzhen, Guangdong 518063 (CN); HUANG, Yufeng, Shenzhen, Guangdong 518063 (CN); LIU, Zhanghua, Shenzhen, Guangdong 518063 (CN); GAO, Qihao, Shenzhen, Guangdong 518063 (CN)
(74) Representative: Michalski Hüttermann & Partner mbB
(86) International application number: PCT/CN2023/119102
(87) International publication number: WO 2025/054964

(57) **Abstract**

A control method, a display device, a water propulsion system, a watercraft, and a computer-readable storage medium, are provided. The control method is used for a display device. The display device is communicatively connected to a water propulsor, and the water propulsor includes a trimming device. The control method includes: receiving an input to generate a trimming instruction, the trimming instruction carrying a target trimming angle; sending the trimming instruction to the trimming device to cause the trimming device to trim to the target trimming angle; receiving a real-time trimming angle fed back by the trimming device during the process of trimming to the target trimming angle; and displaying an animation of the real-time trimming state of the water propulsor based on the real-time trimming angle.

## Description

### TECHNICAL FIELD

The present application relates to the technical field of watercraft, and in particular, to a control method, a display device, a water propulsion system, watercraft, and a computer-readable storage medium.

### TECHNICAL BACKGROUND

A water propulsor, such as an outboard motor, is a detachable power device that is mounted on the stern plate of boats, ships, or other watercraft to propel the boats or ships to navigate. Water propulsors are usually equipped with a trimming device, which is used to control the angle between the propeller shaft and the water surface, as well as the height of the propeller above the water surface during navigation, to adapt to different water conditions. When the ship is moored or not in use for a long time, the trimming device can also lift the underwater part of the outboard motor out of the water to avoid corrosion and collision damage of the underwater part.

The trimming process of a water propulsor usually takes a period of time, and during this period, the user may want to know the real-time trimming state of the water propulsor. In the related art, during the trimming process of the water propulsor, if the user wants to know the real-time trimming state of the water propulsor, the user must move to the vicinity of the water propulsor to visually observe the current trimming state of the water propulsor, which is cumbersome and inconvenient.

### SUMMARY

In view of this, the present disclosure provides a control method, a display device, a water propulsion system, watercraft, and a computer-readable storage medium.

In a first aspect, some embodiments of the present disclosure provide a control method for a display device, where the display device is communicatively connected to a water propulsor, and the water propulsor includes a trimming device. The control method includes:
receiving an input from a user to generate a trimming instruction, where the trimming instruction carries a target trimming angle;
sending the trimming instruction to the trimming device to cause the trimming device to trim to the target trimming angle;
receiving a real-time trimming angle fed back by the trimming device during the process of trimming to the target trimming angle;
displaying an animation of the real-time trimming state of the water propulsor based on the real-time trimming angle.

In a second aspect, some embodiments of the present disclosure provide a display device, which includes a processor, a memory, and a display unit. The display unit is connected to the processor, and a computer program is stored in the memory. The processor implements the control method mentioned in the first aspect when executing the computer program.

In a third aspect, some embodiments of the present disclosure provide a water propulsion system, which includes the display device mentioned in the second aspect and a water propulsor communicatively connected to the display device.

In a fourth aspect, some embodiments of the present disclosure provide a watercraft, which includes a hull and the water propulsion system mentioned in the third aspect, where the water propulsion system is disposed on the hull.

In a fifth aspect, some embodiments of the present disclosure provide a computer-readable storage medium, on which computer instructions are stored. The computer instructions implement the control method mentioned in the first aspect when executed by a processor.

### BRIEF DESCRIPTION OF DRAWINGS

To illustrate the technical solutions in the embodiments of the present disclosure, the following introduces the drawings required for describing the embodiments. Obviously, the drawings in the following description are only some embodiments of the present disclosure. For those of ordinary skill in the art, other drawings can be obtained according to these drawings without creative labor.
FIG. 1 is a schematic structural diagram of a watercraft provided by some embodiments of the present disclosure.
FIG. 2 is a schematic structural diagram of a water propulsor provided by some embodiments of the present disclosure.
FIG. 3 is a schematic structural diagram of a watercraft provided by some embodiments of the present disclosure.
FIG. 4 is a schematic diagram of a connection between a display device and a water propulsor provided by some embodiments of the present disclosure.
FIG. 5 is a flowchart of a control method provided by some embodiments of the present disclosure.
FIGS. 6(a)-6(c) are schematic diagrams of three forms of angle level adjustment components provided by embodiments of the present disclosure.
FIG. 7 is a schematic diagram of a user setting a target trimming angle by clicking an angle level adjustment component provided by some embodiments of the present disclosure.
FIG. 8 is a schematic diagram of an angle level adjustment component provided by some embodiments of the present disclosure.
FIG. 9 is a schematic diagram of an angle level adjustment component provided by some embodiments of the present disclosure.
FIG. 10 is a schematic diagram of real-time displaying a trimming angle corresponding to a position where a level adjustment element is located provided by some embodiments of the present disclosure.
FIG. 11(a) is a schematic diagram of an identification line identifying a current trimming angle moving toward an identification line identifying a target trimming angle during a trimming process provided by some embodiments of the present disclosure.
FIG. 11(b) is a schematic diagram of controlling an angle gear range element to present different colors in a trimming angle setting phase and a trimming phase provided by some embodiments of the present disclosure.
FIG. 12 is a schematic diagram of setting a target trimming angle for water propulsor in a linkage mode provided by some embodiments of the present disclosure.
FIG. 13 is a schematic diagram of displaying an alignment identifier between level interval elements of water propulsor in a linkage mode provided by some embodiments of the present disclosure.
FIG. 14 is a schematic diagram of displaying an association identifier between water propulsors in a linkage mode provided by some embodiments of the present disclosure.
FIG. 15(a) is a schematic diagram of automatic switching between a one-touch trimming component and a one-touch reset component provided by some embodiments of the present disclosure.
FIG. 15(b) is a schematic structural diagram of a clamp of a trimming device provided by some embodiments of the present disclosure.
FIG. 16(a) is a schematic diagram of displaying an abort component during a trimming process provided by some embodiments of the present disclosure.
FIG. 16(b) is a schematic diagram of displaying reset prompt information in a main interface provided by some embodiments of the present disclosure.
FIG. 16(c) is a schematic diagram of an orientation display component provided by some embodiments of the present disclosure.
FIG. 17 is a schematic diagram of distinguishing a trimming direction by a direction of a progress bar provided by some embodiments of the present disclosure.
FIG. 18 is a schematic diagram of displaying a trimming animation through a virtual water propulsor provided by some embodiments of the present disclosure.
FIG. 19 is a schematic logical structural diagram of a display device provided by some embodiments of the present disclosure.

### DETAILED DESCRIPTION

The following describes the technical solutions in the embodiments of the present disclosure with reference to the drawings in the embodiments of the present disclosure. Obviously, the described embodiments are only a part of the embodiments of the present disclosure, not all of them. Based on the embodiments in the present disclosure, all other embodiments obtained by those of ordinary skill in the art without creative labor fall within the protection scope of the present disclosure.

The present disclosure provides a control method, a display device, a water propulsion system, watercraft, and a computer-readable storage medium.

According to the technical solutions of the embodiments of the present disclosure, after receiving an input from a user to generate a trimming instruction, the display device can send the trimming instruction to the trimming device of the water propulsor, and can detect the real-time trimming angle of the trimming device during the trimming process of the trimming device, then feed it back to the display device. The display device generates an animation for displaying the real-time trimming state of the water propulsor based on the real-time trimming angle of the trimming device and displays the animation through the display device. Since the display device has the function of displaying the real-time trimming state of the trimming device of the water propulsor, on this basis, the trimming control function of the trimming device can be further integrated on the display device. Thus, it is possible to avoid safety problems such as trimming jamming and collision that may be caused by the user directly performing trimming control on the display device without knowing the trimming state of the trimming device, and improve the safety of trimming control. In addition, the user can intuitively perceive the real-time trimming state of the water propulsor through the animation displayed by the display device, and can also directly perform trimming control through the display device without moving to the vicinity of the water propulsor, which is highly convenient and improves the user experience.

A water propulsor, such as an outboard motor, is a detachable power device that is mounted on the stern plate of boats, ships, or other watercraft to propel the boats or ships to navigate. Water propulsors are usually equipped with a trimming device, which is used to control the angle between the propeller shaft and the water surface as well as the height of the propeller above the water surface during navigation to adapt to different water conditions; and when the ship is moored or not in use for a long time, to trim the underwater part of the outboard motor out of the water to avoid corrosion and collision of the underwater part.

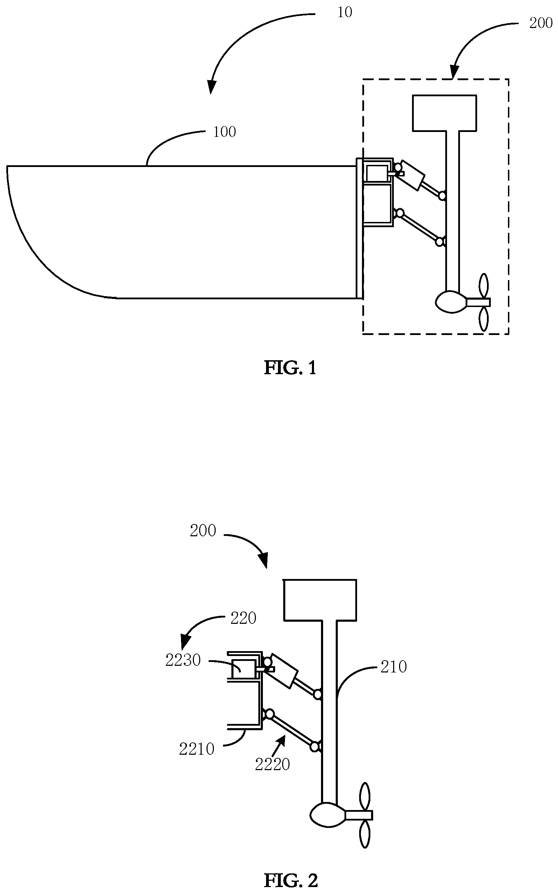

For example, as shown in Fig. 1, which is a schematic diagram of a watercraft 10, the watercraft 10 includes a hull 100 and a water propulsor 200, and the water propulsor 200 is movably connected to the hull 100. As a power generating equipment for the watercraft 10, the water propulsor 200 can change its attitude relative to the hull 100 to place it under the water surface when the water propulsor 200 needs to be used, thereby providing thrust for the movement of the hull 100. When the water propulsor 200 does not need to be used, it is placed above the water surface to reduce the water resistance received by the hull 100 during movement.

The watercraft 10 in the embodiment of the present disclosure may be various water vehicles such as commercial ships, passenger ships, yachts, fishing boats, sailboats, and civil ships, and may also be equipment that can move in water such as water inspection equipment, water treatment equipment, and water environment monitoring equipment, which is not limited in the present disclosure. When the watercraft 10 is various ships, the movable body 100 is correspondingly a hull.

The water propulsor 200 in the embodiment of the present disclosure may be a device capable of generating power such as an outboard motor or a pod propulsor. The water propulsor 200 may be installed at the head, tail, or side, and when installed at the side, it can be used as a thruster to assist the steering of the watercraft 10 and the like.

As shown in Fig. 2, which is a schematic structural diagram of a water propulsor 200, the water propulsor 200 includes a main engine 210 and a trimming device 220, where the trimming device 220 is connected to the main engine 210. In some embodiments, the trimming device 220 includes a clamp 2210, an adjustment mechanism 2220, and a motor 2230, where the clamp 2210 is used to be fixed to the movable body 100, the adjustment mechanism 2220 is connected between the clamp 2210 and the main engine 210, and the motor 2230 is installed on the clamp 2210 or the main engine 210 and connected to the adjustment mechanism 2220 for driving the adjustment mechanism 2220 to deform. The deformation of the adjustment mechanism 2220 drives the main engine 210 to lift relative to the clamp 2210, and the main engine 210 is always located outside the movable body 100. Exemplarily, the main engine 210 at least includes a drive motor and a propeller, and the drive motor is used to drive the propeller to rotate to realize the propulsion of the watercraft 10 (shown in Fig. 1).

Generally, after the user issues a trimming instruction, the trimming device 220 can trim based on the trimming instruction. Since the trimming process of the trimming device 220 usually takes a period of time, the user may want to know the trimming state of the trimming device 220 in real time during this period, such as what the current trimming angle of the trimming device 220 is, the speed of trimming, the proportion of the completed trimming process in the entire trimming process, and the like.

In the related art, if the user wants to know the real-time trimming state of the water propulsor 200, the user needs to move to the vicinity of the water propulsor 200 to visually observe the trimming state of the water propulsor 200, which is cumbersome and inconvenient. For example, taking the water propulsor 200 installed at the stern as an example, if the user issues a trimming instruction through a button in the cabin at this time, if the user wants to know the real-time trimming state of the water propulsor 200, he needs to walk to the stern where the water propulsor 200 is installed to visually observe, which is very cumbersome. And if the user is inside the cabin, he cannot intuitively perceive the real-time trimming state of the water propulsor 200.

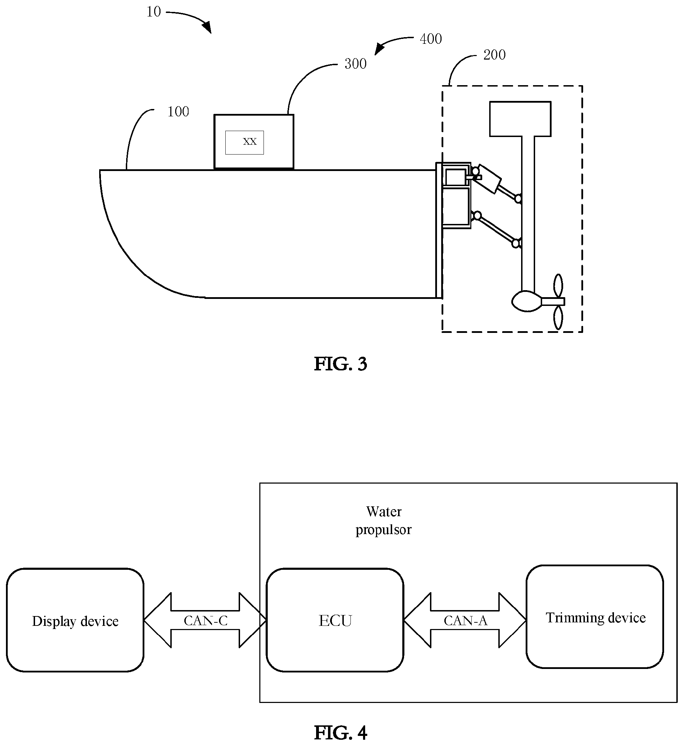

Based on this, some embodiments of the present disclosure provide a control method. Referring to Fig. 3, considering that a display device 300 is usually provided in the watercraft 10, the display device 300 can usually be used with the water propulsor 200 to display some operating parameters of the water propulsor 200. Therefore, in the embodiment of the present disclosure, the real-time trimming angle of the water propulsor 200 can be real-time detected during the trimming process of the water propulsor 200, then fed back to the display device 300, and the display device 300 generates an animation for displaying the real-time trimming state of the water propulsor 200 based on the real-time trimming angle of the water propulsor 200 and displays the animation through the display device 300. Since the display device 300 has the function of displaying the real-time trimming state of the trimming device 220 of the water propulsor 200, on this basis, the trimming control function of the trimming device 220 can be further integrated on the display device 300. Thus, it is possible to avoid safety problems such as trimming jamming and collision that may be caused by the user directly performing trimming control on the display device 300 without knowing the trimming state of the trimming device 220, and improve the safety of trimming control. In addition, the user can intuitively perceive the real-time trimming state of the water propulsor 200 through the animation displayed by the display device 300, and can also directly perform trimming control through the display device 300 without moving to the vicinity of the water propulsor 200, which is highly convenient and improves the user experience. As shown in Fig. 3, the watercraft 10 includes a movable body 100 and a water propulsor 200, and the watercraft 10 further includes a display device 300. The display device 300 may be a device with a display function such as a display screen, and the display device 300 may be disposed in the movable body 100. For example, when the watercraft 10 is a ship, the display device 300 may be a display screen disposed in the cabin.

The display device 300 and the water propulsor 200 can be communicatively connected in a wired or wireless manner. For example, as shown in Fig. 4, which is a schematic diagram of a way of realizing communication connection between the display device 300 and the water propulsor 200, the water propulsor 200 includes a central control system Electronic Control Unit (ECU), and the display device 300 communicates with the ECU through a group C Controller Area Network (CAN), and the trimming device 220 communicates with the ECU through a group A CAN.

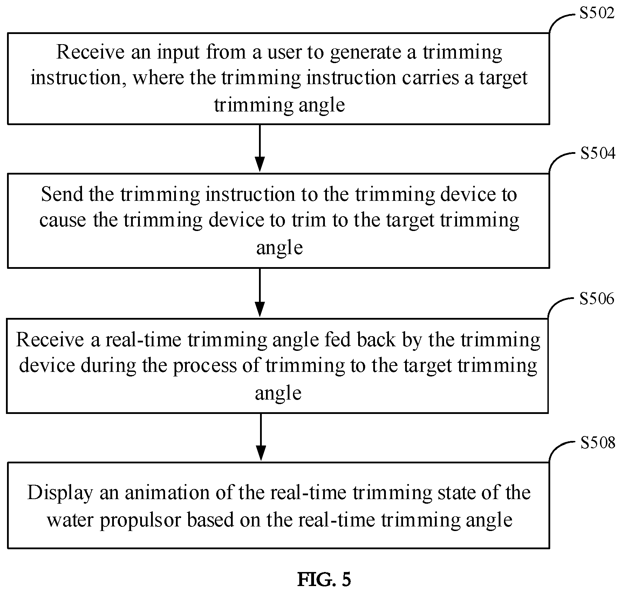

The control method provided by the embodiment of the present disclosure can be implemented by the above-mentioned display device 300. As shown in Fig. 5, the control method may include the following steps:
S502. Receive an input from a user to generate a trimming instruction, where the trimming instruction carries a target trimming angle;
In step S502, an input from a user can be received to generate a trimming instruction, where the trimming instruction carries a target trimming angle, and the target trimming angle is a trimming angle that the user expects the trimming device 220 to reach. The user's input may refer to the user's voice input or action input. For example, a sound collector may be integrated on the display device 300, and the sound collector can collect the user's voice information, and the user can issue a trimming instruction through voice; or, an image collector may be integrated on the display device 300, and the image collector can collect the user's actions, and the user can issue an instruction through gestures; or, the display device 300 has a touch button or a touch interface for setting a trimming angle, and the user can also issue a trimming instruction by operating the touch button or the touch interface through the display device 300. There are various ways for the user to issue a trimming instruction, which is not limited to the embodiments of the present disclosure.

S504. Send the trimming instruction to the trimming device 220 to cause the trimming device 220 to trim to the target trimming angle;
In step S504, after generating a trimming instruction based on the user's input, the trimming instruction can be sent to the trimming device 220 to cause the trimming device 220 to trim to the target trimming angle based on the trimming instruction. The display device 300 can be communicatively connected to the water propulsor 200 in a wired or wireless manner, and then send the generated trimming instruction to the water propulsor 200. For example, as shown in Fig. 4, the water propulsor 200 may include an ECU, which can be respectively connected to the trimming device 220 and the display device 300. The display device 300 can send a trimming instruction to the ECU, and the ECU parses the trimming instruction and controls the trimming device 220 to trim to the target trimming angle. In other embodiments, the trimming device 220 includes a processing circuit, and after the ECU parses the trimming instruction, it can send the parsed instruction to the processing circuit, and the processing circuit controls the trimming device 220 to trim to the target trimming angle based on the parsed instruction.

S506. Receive a real-time trimming angle fed back by the trimming device 220 during the process of trimming to the target trimming angle;
In step S506, during the process of the trimming device 220 trimming to the target trimming angle, the water propulsor 200 can real-time detect the current real-time trimming angle of the trimming device 220 and feed the real-time trimming angle back to the display device 300. For example, the water propulsor 200 may include an angle sensor, and the real-time trimming angle of the trimming device 220 can be real-time detected through the angle sensor, or the water propulsor 200 can also detect the current real-time trimming angle and feed it back in other ways, such as converting the real-time trimming angle through a Hall signal output by the motor 2230 shown in Fig. 2, which is not limited to the embodiments of the present disclosure.

S508. Display an animation of the real-time trimming state of the water propulsor 200 based on the real-time trimming angle.

In step S508, after receiving the real-time trimming angle fed back by the water propulsor 200, the display device 300 can generate an animation for displaying the real-time trimming state of the water propulsor 200 based on the real-time trimming angle and display the animation. The animation may be any form of animation, which can dynamically show the trimming process of the water propulsor 200, so that the user can know the current real-time trimming state of the water propulsor 200 based on the animation. For example, the animation may include a virtual water propulsor, and the actual trimming process of the real water propulsor 200 is demonstrated through the virtual water propulsor, or the animation may be a progress bar, and the current progress of the trimming process is reflected through the progress bar. Of course, the form of the animation can be set based on actual needs, which is not limited to the embodiments of the present disclosure.

In the related art, the display device 300 can usually only display the trimming angle of the water propulsor 200, but the user cannot adjust the trimming angle of the water propulsor 200 through the display device 300, which is not convenient enough. To facilitate the user to adjust the trimming angle of the water propulsor 200, in some embodiments, the display device 300 can integrate a trimming angle adjustment function. For example, a trimming angle setting component can be displayed on the display interface of the display device 300, and the user can set the target trimming angle through an interactive operation with the trimming angle setting component and send a trimming instruction through the display device 300.

In some embodiments, to make the setting of the trimming angle more convenient, the trimming angle setting component may include an angle level adjustment component, and the interactive operation may be a click operation of the user in the angle level adjustment component, and the trimming angle corresponding to the user's click position is the target trimming angle. The angle level adjustment component can display the adjustable range of the trimming angle of the trimming device 220, so that the user can set the target trimming angle within the adjustable range. For example, the angle level adjustment component can represent the adjustable range of the trimming angle of the trimming device 220 through a strip-shaped or arc-shaped graph, and different positions of the graph represent different trimming angles. The user can set the target trimming angle through an interactive operation in the graph.

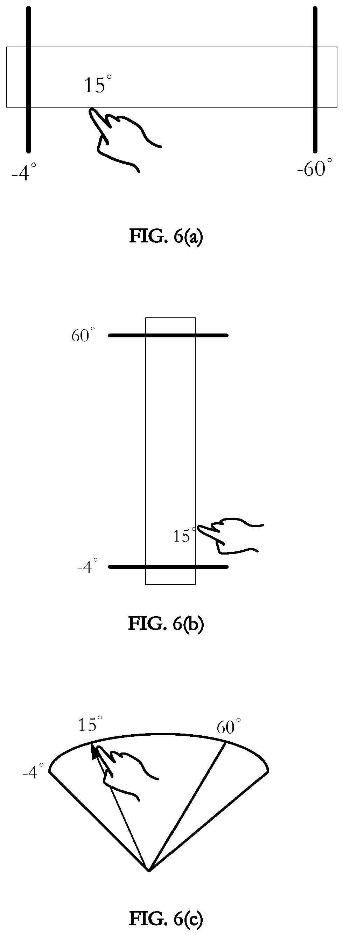

For example, as shown in Figs. 6(a)-6(c), different styles of angle level adjustment components are shown. Assuming that the adjustable range of the trimming angle is -4°-60°, as shown in Fig. 6(a), the angle level adjustment component may include a strip-shaped graph, and a part of the length of the graph may represent the adjustable range of the trimming angle; as shown in Fig. 6(b), the angle level adjustment component may include a strip-shaped graph, and a part of the height of the graph may represent the adjustable range of the trimming angle; as shown in Fig. 6(c), the angle level adjustment component may also include an arc-shaped graph, and a part of the angle of the arc may represent the adjustable range of the trimming angle. The user can click a position in the above graph to set the target trimming angle to the trimming angle corresponding to the clicked position. In some scenarios, the entire length, height, or angle of the graph can be used to represent the full angle range composed of the lower limit trimming angle and the upper limit trimming angle that the trimming device 220 can reach. The adjustable range may be an angle range where the trimming device 220 can be adjusted arbitrarily, for example, any action of upward trimming adjustment or downward trimming adjustment can be performed, while the angle range other than the arbitrarily adjustable angle range in the full angle range is a restricted adjustment angle range. For example, the lower limit trimming angle of the trimming device 220 is -4°, and the upper limit trimming angle is 70°, at this time, -4° to 70° is the full angle range. Among them, for the angle range of -4° to 60°, the target trimming angle can be set arbitrarily within this angle range. However, for the angle range of 60° to 70°, when in this angle range, the trimming device 220 may be in a limited position state. At this time, the target trimming angle of the trimming device 220 cannot be set arbitrarily, that is, any action of upward trimming adjustment or downward trimming adjustment cannot be performed, and the trimming adjustment action corresponding to exiting the limited position state can be performed. Therefore, this angle range is a restricted adjustment angle range.

In some embodiments, to facilitate the user to know the trimming angle corresponding to each position of the angle level adjustment component, the angle level adjustment component may be marked with trimming angle scales, so that the user can know the trimming angle corresponding to the current position through the scales and then perform click setting.

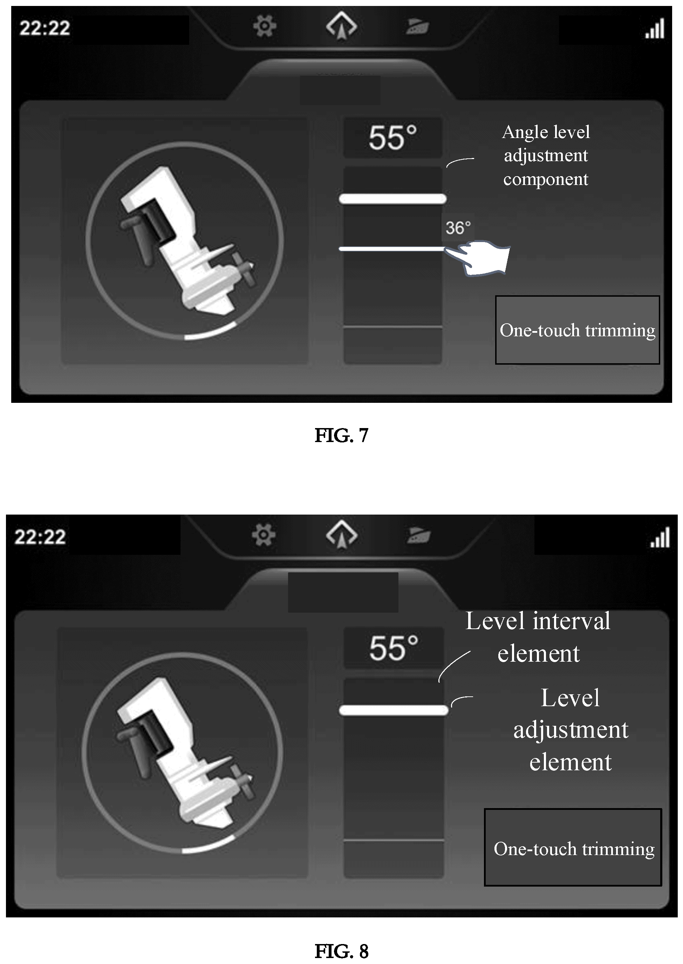

In some embodiments, considering that the size of the angle level adjustment component is limited, marking scales may not be aesthetically pleasing. Therefore, the angle level adjustment component may not carry scales. In this case, to facilitate the user to know the angle corresponding to the currently clicked position, the control method further includes: in response to a click operation of the user in the angle level adjustment component, displaying the trimming angle corresponding to the user's click position. After detecting a click operation of the user in the angle level adjustment component, the display device 300 can display the trimming angle corresponding to the user's click position, so that the user can adjust the clicked position based on the displayed trimming angle. For example, as shown in Fig. 7, which is a schematic diagram of a trimming angle setting interface according to some embodiments of the present disclosure, when the user clicks a position in the gear adjustment component, the trimming angle corresponding to the position can be displayed. In addition, the current trimming angle of the water propulsor 200, such as 55°, can also be displayed in the interface.

In some embodiments, the trimming angle setting component includes an angle level adjustment component, and the angle level adjustment component may include a level interval element and a level adjustment element. The interactive operation includes an operation of the user dragging the level adjustment element to move within the level interval element. When the user releases the level adjustment element, the trimming angle corresponding to the current position of the level adjustment element is the target trimming angle. The level interval element can be used to display the adjustable range of the trimming angle of the trimming device 220. For example, the level interval element can represent the adjustable range of the trimming angle of the trimming device 220 through a strip-shaped or arc-shaped graph, and different positions of the graph represent different trimming angles. The level adjustment element may be an element that can move within the level interval element to identify the trimming angle, and the level adjustment element may also be represented by various icons. For example, the level adjustment element may be a slider, a line, or the like. When setting the trimming angle, the user can directly drag the level adjustment element to move within the level interval element, and when the user releases the hand, the trimming angle corresponding to the position of the level adjustment element can be used as the target trimming angle that the user wants to set. This dragging method makes the setting of the trimming angle more convenient and faster.

As shown in Fig. 8, which is a diagram of a trimming angle setting interface according to some embodiments, the level interval element in the angle level adjustment component may be a strip-shaped graph, a part of the height of the graph represents the adjustable range of the trimming angle of the trimming device 220 (for example, -4°-60°), and the level adjustment element may be an adjustment slider located in the strip-shaped graph. The user can drag the adjustment slider to move up and down in the strip-shaped graph to set the target trimming angle.

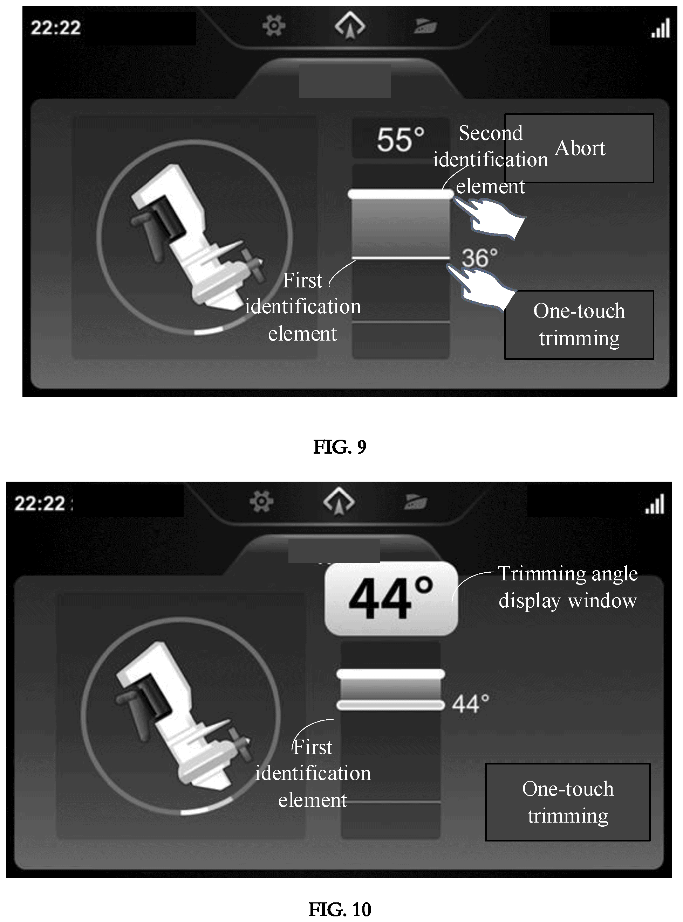

In some embodiments, when the user drags the level adjustment element to move within the level interval element, to facilitate the user to know the current position of the level adjustment element, the angle level adjustment component may further include a first identification element, and the control method further includes: in response to an operation of the user dragging the level adjustment element to move within the level interval element, real-time displaying the first identification element identifying the current position of the level adjustment element. When detecting an operation of the user dragging the level adjustment element to move within the level interval element, the first identification element identifying the current position of the level adjustment element can be real-time displayed. The first identification element may be represented by various icons such as a line, as long as it can identify the current position of the level adjustment element. For example, as shown in Fig. 9, when the user drags the level adjustment element to move within the level interval element, the current position of the level adjustment element can be displayed through the first identification element.

In some embodiments, to facilitate the user to know the current trimming angle of the trimming device 220, that is, the trimming angle corresponding to the position of the angle level adjustment component before the user drags the angle level adjustment component. The angle level adjustment component may further include a second identification element. The control method further includes: displaying the second identification element identifying the position of the level adjustment element before the user drags the level adjustment element. The second identification element may also be represented by various icons such as a line. For example, as shown in Fig. 9, the current trimming angle of the water propulsor 200 is 55°, that is, before the user drags the level adjustment element, the angle level adjustment component is at the position corresponding to 55°, so the position can be identified through the second identification element.

In some embodiments, when the user releases the level adjustment element, the angle corresponding to the position of the level adjustment element at this time is the target trimming angle. To facilitate the user to know the size of the currently set trimming angle, the control method further includes: when detecting an operation of the user releasing the level adjustment element, displaying the trimming angle corresponding to the current position of the level adjustment element. For example, as shown in Fig. 9, the user drags the level adjustment element to the position of 36° and releases the level adjustment element, and the angle corresponding to the current position of the level adjustment element (36°) can be displayed nearby.

In some embodiments, during the process of the user dragging the level adjustment element to move within the level interval element, to facilitate the user to intuitively know whether the trimming angle corresponding to the current position of the level adjustment element is the angle that the user wants to set, the control method further includes: after detecting an operation of the user dragging the level adjustment element to move within the level interval element, real-time displaying the trimming angle corresponding to the current position of the level adjustment element. For example, as shown in Fig. 10, during the process of the user dragging the level adjustment element to move within the level interval element, the trimming angle corresponding to the level adjustment element is constantly changing. Therefore, the trimming angle corresponding to the current level adjustment element can be real-time displayed through a trimming angle display window. At the same time, the trimming angle corresponding to the current position can also be displayed next to the first identification element identifying the current position of the level adjustment element.

In some embodiments, to allow the user to intuitively know the difference between the current trimming angle of the water propulsor 200 and the set target trimming angle, the angle level adjustment component further includes a third identification element for identifying the current trimming angle of the water propulsor 200 in the level interval element, and a fourth identification element for identifying the target trimming angle. Displaying an animation of the real-time trimming state of the water propulsor 200 based on the real-time trimming angle includes: controlling the third identification element to move toward the fourth identification element based on the real-time trimming angle. During the movement of the third identification element toward the fourth identification element, the trimming angle corresponding to the current position of the third identification element is the same as the real-time trimming angle of the water propulsor 200. By controlling the third identification element identifying the current trimming angle to move toward the fourth identification element identifying the target trimming angle, the real-time trimming state of the water propulsor 200 can be dynamically and intuitively displayed, so that the user can perceive the real-time trimming state. For example, through the above animation, the user can intuitively know the current real-time trimming angle, the proportion of the completed trimming process in the entire trimming process, the gap from the target trimming angle, and the like.

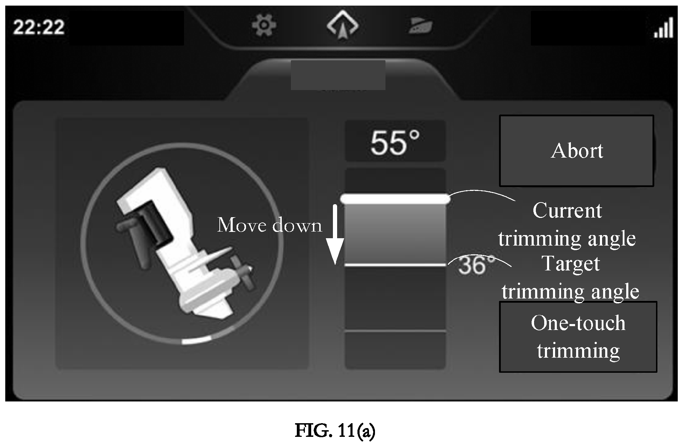

For example, as shown in Fig. 11(a), during the trimming process of the water propulsor 200, the identification line identifying the current trimming angle will automatically move toward the identification line identifying the target trimming angle until it moves to the position of the target trimming angle, and then the two identification lines coincide into one identification line.

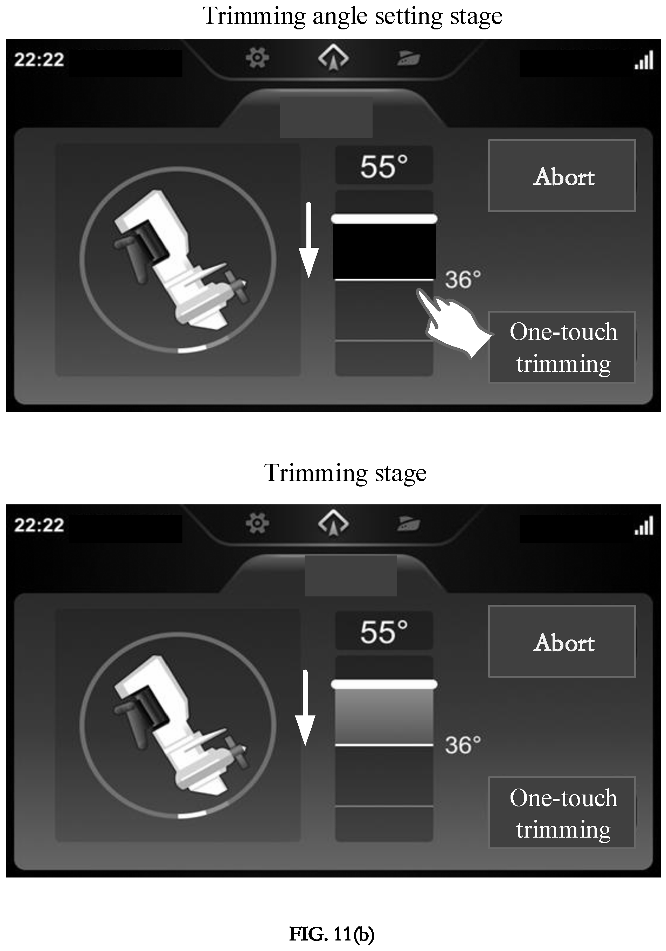

In some embodiments, considering that during the stage of the user setting the target trimming angle and the stage of the water propulsor 200 performing the trimming action, the angle identification elements in the angle level adjustment component will move. To better distinguish these two stages, in some embodiments, the control method further includes: during the process of the user dragging the level adjustment element to move within the level interval element to set the target trimming angle, controlling the level interval element to present a first color. The step of displaying an animation of the real-time trimming state of the water propulsor 200 based on the real-time trimming angle may include: during the process of the trimming device 220 trimming to the target trimming angle, controlling the level interval element to present a second color, where the first color is different from the second color. By setting the level interval element to different colors, the user can be intuitively helped to distinguish whether it is currently in the stage of setting the target trimming angle or the stage of the water propulsor 200 performing the trimming action. When controlling the level interval element to present the first color or the second color, all or part of the area of the level interval element may be controlled to present the first color or the second color. For example, the area between the current trimming angle and the target trimming angle in the level interval element may be controlled to present the first color or the second color, or the entire area of the level interval element may be controlled to present the first color or the second color. As shown in Fig. 11(b), the left figure is a schematic diagram of the trimming angle setting stage, and the right figure is a schematic diagram of the trimming stage. The area between the current trimming angle and the target trimming angle in the level interval element can be controlled to present different colors in the two stages (where different grays in the figure represent different colors).

In some embodiments, the trimming angle setting component includes an angle editing component, the interactive operation includes an angle editing operation of the user in the angle editing component, and the target trimming angle is set based on the angle editing operation of the user. For example, the angle editing component may be an angle input box, and the user can directly input the target trimming angle in the angle input box.

In some embodiments, the trimming angle setting component includes an angle selection component, the interactive operation includes an operation of the user selecting a preset angle through the angle selection component, and the target trimming angle is set based on the angle selection operation of the user. For example, the angle selection component may include a drop-down menu. When the user clicks the angle selection component, different trimming angles can be displayed in the drop-down menu, and the user can select the target trimming angle to be set from them, so that the user does not need to input the angle, which is faster. In some embodiments, the angle selection component may also include a "+" button and a "-" button. The user can click the above two buttons to increase or decrease the trimming angle in sequence on the basis of the existing trimming angle until the target trimming angle that the user wants to set is reached.

In some embodiments, for the case where the trimming angle setting component includes an angle editing component or an angle selection component, or the trimming angle setting component includes a level adjustment component and the user sets the target trimming angle by clicking the level adjustment component, the trimming angle setting component further includes a level interval element. After the user sets the target trimming angle through the above angle editing component or angle selection component, the control method further includes: displaying an identifier corresponding to the target trimming angle set by the user in the level interval element to identify the target trimming angle in the level interval element.

Similarly, in some embodiments, for the case where the trimming angle setting component includes an angle editing component or an angle selection component, or the trimming angle setting component includes a level adjustment component and the user sets the target trimming angle by clicking the level adjustment component, the trimming angle setting component further includes a third identification element for identifying the current trimming angle of the water propulsor 200 in the level interval element, and a fourth identification element for identifying the target trimming angle. The step of displaying an animation of the real-time trimming state of the water propulsor 200 based on the real-time trimming angle may include: controlling the third identification element to move toward the fourth identification element based on the real-time trimming angle. Thus, the real-time trimming state of the water propulsor 200 can be dynamically and intuitively displayed, so that the user can perceive the real-time trimming state.

Generally, a multiple water propulsors 200 can be installed in everyone watercraft 10, and the multiple water propulsors 200 work together to generate power for the watercraft 10. In the related art, for the scenario where the watercraft 10 includes a multiple water propulsors 200, when controlling the trimming of the water propulsors 200, each water propulsor 200 can only be controlled individually. For example, each water propulsor 200 includes a trimming button, and the user needs to sequentially touch the trimming button of each water propulsor 200 to control the trimming of each water propulsor 200. This control method is inefficient. To facilitate the control of a multiple water propulsors 200, some or all of the multiple water propulsors 200 can be set to a linkage mode, and the multiple water propulsors 200 in the linkage mode can be controlled synchronously. For example, in some embodiments, if the water propulsors 200 include multiple ones, the multiple water propulsors 200 can be divided into one or more groups. The multiple water propulsors 200 in the same group can be in a linkage mode, and when the multiple water propulsors 200 in the same group are in the linkage mode, the trimming instruction can act on all the water propulsors 200 in the group, so that the synchronous control of the multiple water propulsors 200 can be realized, and the control efficiency can be improved.

For example, assuming that the watercraft 10 includes four water propulsors 200, if the target trimming angles to be set for the four water propulsors 200 are the same, all 50°, the four water propulsors 200 can be set to a linkage mode to control the four water propulsors 200 to trim to 50° synchronously. If the target trimming angles of the No. 1 and No. 2 water propulsors 200 among the four water propulsors 200 are the same, both 50°; and the target trimming angles of the No. 3 and No. 4 water propulsors 200 are the same, both 40°, the No. 1 and No. 2 water propulsors 200 can be divided into a group and set to a linkage mode to control the two water propulsors 200 to trim to 50° synchronously, and then the No. 3 and No. 4 water propulsors 200 can be divided into a group and set to a linkage mode to control the 2 water propulsors 200 to trim to 40° synchronously.

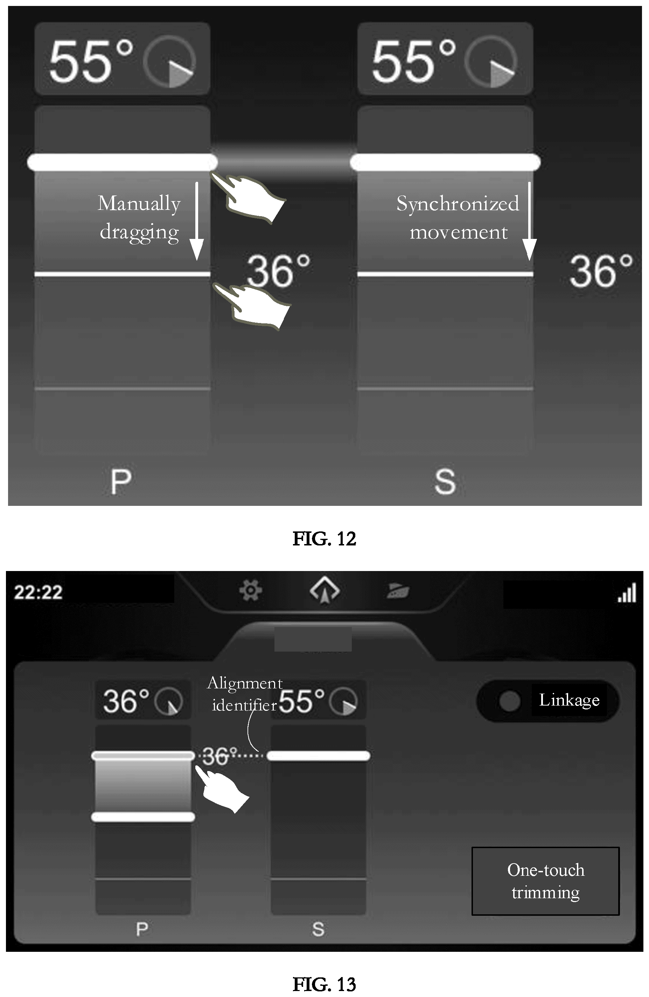

In some embodiments, if the watercraft 10 includes a multiple water propulsors 200, to facilitate the setting of the trimming angles of the multiple water propulsors 200, each water propulsor 200 may correspond to a trimming angle setting component. The control method further includes: for a multiple water propulsors 200 in the same group, if the multiple water propulsors 200 in the group are in a linkage mode, the target trimming angles of all the water propulsors 200 in the group can be set simultaneously based on an interactive operation between the user and the trimming angle setting component of any one of the water propulsors 200 in the group. That is, for the multiple water propulsors 200 in a linkage mode, the user can set the target trimming angles of the multiple water propulsors 200 simultaneously only through the trimming angle setting component of one of the multiple water propulsors 200, which can improve the efficiency of the user in setting the trimming angles. For example, as shown in Fig. 12, the two water propulsors 200 in the figure are in a linkage mode. At this time, the current trimming angles of the two water propulsors 200 are both 55°. The user can drag the level adjustment element in the angle level adjustment component of one of the water propulsors 200 to move within the corresponding level interval element to move to the position corresponding to the target trimming angle of 36°. During the process of the user dragging the level adjustment element of one of the multiple water propulsors 200 to move within the level interval element, the level adjustment element of the other water propulsor 200 will also move synchronously within the level interval element to the position corresponding to the target trimming angle of 36°. That is, the user completes the setting of the target trimming angles of the two water propulsors 200 through one interactive operation. Of course, for scenarios where there are more water propulsors 200 in a linkage mode, the target trimming angles can also be set in the same way.

Considering that for the multiple water propulsors 200 in the linkage mode, since it is necessary to set their target trimming angles synchronously and control their trimming synchronously, their current trimming angles can be aligned first before synchronous angle setting and synchronous trimming control, so that their current trimming angles are consistent, which is convenient for subsequent synchronous angle setting and synchronous trimming control. Therefore, in some embodiments, before setting the target trimming angles of all the water propulsors 200 in the group simultaneously based on an interactive operation between the user and the trimming angle setting component of any one of the water propulsors 200 in the group, the control method further includes: if it is determined that the current trimming angles of any two water propulsors 200 in the group are inconsistent, sending a trimming alignment instruction to the trimming devices 220 of all the water propulsors 200 in the group to adjust the current trimming angles of all the water propulsors 200 in the group to the same angle.

When aligning the current trimming angles of the multiple water propulsors 200 in a linkage mode, a reference angle can be determined, and then the trimming angles of the multiple water propulsors 200 in the linkage mode can all be adjusted to the reference angle. The reference angle may be the current trimming angle of one of the multiple water propulsors 200, that is, the user only needs to adjust the trimming angles of the other water propulsors 200 to the current trimming angle. In some embodiments, the reference angle may also be an angle comprehensively determined based on the current trimming angles of the multiple water propulsors 200, such as an average angle, so that the efficiency of adjusting the multiple water propulsors 200 to the reference angle is the highest. In some embodiments, in some scenarios, the reference angle may also be a default angle, such as 0°.

In some embodiments, the user can align the current trimming angles of the multiple water propulsors 200 through the trimming angle setting component of the water propulsor 200. For example, the step of sending a trimming alignment instruction to the water propulsors 200 in the group includes: determining the reference angles of all the water propulsors 200 in the group based on an interactive operation between the user and the trimming angle setting component of at least one of the multiple water propulsors 200 in the group, and then sending a trimming alignment instruction to the trimming devices 220 of at least some of the water propulsors 200 in the group to cause the trimming devices 220 of all the water propulsors 200 in the group to trim to the reference angle, where the current trimming angles of the at least some of the water propulsors 200 are different from the reference angle.

For example, assuming that the No. 1 water propulsor 200, the No. 2 water propulsor 200, the No. 3 water propulsor 200, and the No. 4 water propulsor 200 are in a linkage mode, and their current trimming angles are 10°, 15°, 20°, and 25° respectively. Assuming that the current trimming angle of the No. 1 water propulsor 200 is used as the reference angle, the user can perform interactive operations with the trimming angle setting components of the No. 2 water propulsor 200, the No. 3 water propulsor 200, and the No. 4 water propulsor 200 respectively (for example, dragging the level adjustment element to move within the level interval element) to set their respective trimming angles to 10°, and send trimming instructions to the No. 2 water propulsor 200, the No. 3 water propulsor 200, and the No. 4 water propulsor 200 respectively to control these water propulsors 200 to trim to 10°, so that the current trimming angles of the four are aligned. After alignment, the user can set the target trimming angles of the four water propulsors 200 synchronously and control the four water propulsors 200 to trim to the target trimming angle synchronously.

In some embodiments, when aligning the current trimming angles of the multiple water propulsors 200 in the linkage mode, considering that the user needs to sequentially adjust the trimming angles of the multiple water propulsors 200 to the reference angle, this process is cumbersome and inefficient. To improve the efficiency of the alignment operation, the display device 300 may further display a one-touch alignment component. The step of sending a trimming alignment instruction to the water propulsors 200 in the group includes: in response to an operation of the user clicking the one-touch alignment component, sending a trimming alignment instruction carrying a reference angle to the trimming devices 220 of at least some of the water propulsors 200 in the group, where the current trimming angles of the at least some of the water propulsors 200 are different from the reference angle. By adjusting the trimming angles of the water propulsors 200 whose current trimming angles are different from the reference angle to the reference angle, all the trimming devices 220 of the water propulsors 200 in the group can be trimmed to the reference angle.

For example, the trimming angle corresponding to the one-touch alignment component may be a default angle, such as 0°, or the trimming angle corresponding to the one-touch alignment component may also be pre-input by the user. Taking the alignment angle of 0° as an example, after the user clicks the one-touch alignment component, the display device 300 can determine which of the multiple water propulsors 200 in the linkage mode have a current trimming angle other than 0°, and then send a trimming instruction to these water propulsors 200 to control these water propulsors 200 to trim to 0°. In some embodiments, after the user clicks the one-touch alignment component, the display device 300 can send a trimming instruction to all the multiple water propulsors 200 in the linkage mode, and any one of the multiple water propulsors 200 that finds that its current trimming angle is not 0° performs a trimming action to trim to 0°.

In some embodiments, the trimming angle setting component includes the angle level adjustment component, and the angle level adjustment component includes the level interval element and the level adjustment element. The control method includes: for the multiple water propulsors 200 in the same group, during the process of the user dragging the level adjustment element of one of the water propulsors 200 to move within the level interval element of the one of the water propulsors 200, if it is detected that the deviation between the trimming angle corresponding to the current position of the level adjustment element and the current trimming angle of any other water propulsor 200 in the group is less than a preset deviation, an alignment identifier is displayed between the level interval element of the one of the water propulsors 200 and the level interval element of the any other water propulsor 200. Considering that for the multiple water propulsors 200 in the linkage mode, the user usually needs to align their current trimming angles, so for any one of the water propulsors 200, when the user drags its level adjustment element to move within the level interval element to set the trimming angle, if it is found that the trimming angle corresponding to the level adjustment element is relatively close to the current trimming angle of other water propulsors 200 (that is, less than the preset deviation), the alignment identifier, which may be the auxiliary line or the like, can be automatically displayed, so that the user can adjust the position of the level adjustment element based on the alignment identifier. The preset deviation can be set based on actual needs, for example, it can be 3°, 5°, or the like.

In some embodiments, when it is detected that the trimming angle corresponding to the level adjustment element dragged by the user is relatively close to the current trimming angle of other water propulsors 200, in addition to displaying the alignment identifier between the level interval elements of the two water propulsors 200, the level adjustment element dragged by the user can also be automatically adjusted to the position corresponding to the current trimming angle of other water propulsors 200 in the level interval element, so that the current trimming angles of the two water propulsors 200 are aligned. That is, the automatic alignment function can be realized, so that the user does not need to continue dragging, which is more convenient and faster.

For example, as shown in Fig. 13, the two water propulsors 200 in the figure are in the linkage mode. Among them, the current trimming angle of the left water propulsor 200 is 36°, and the current trimming angle of the right water propulsor 200 is 55°. Before synchronously controlling the two water propulsors 200, their current trimming angles can be aligned first. For example, the user can manually drag the level adjustment element of the left water propulsor 200 to move within the level interval element to move to the position of 55°. When it is detected that the level adjustment element is located at a position close to 55 degrees (for example, 50°), at this time, the auxiliary line can be displayed at the 55° position of the two level interval elements to facilitate the user to adjust the position of the level adjustment element based on the auxiliary line. In some embodiments, the level adjustment element can also be automatically moved to the 55° position without the user continuing to drag. Through the above method, the adjustment of the trimming angle is more convenient.

For the multiple water propulsors 200 in the linkage mode, since their current trimming angles need to be aligned first, that is, their current trimming angles are usually consistent before linkage control, to allow the user to more intuitively perceive that they are in the linkage mode and also to facilitate the user to intuitively perceive that the current trimming angles of these water propulsors 200 are consistent, these water propulsors 200 can be associated through some visual identifiers to reflect that they are in a linkage state. For example, in some embodiments, each water propulsor 200 corresponds to one trimming angle setting component, and the trimming angle setting component includes the level interval element and the third identification element for identifying the current trimming angle of the water propulsor 200 in the level interval element. The step of displaying an animation of the real-time trimming state of the water propulsor 200 based on the real-time trimming angle includes: if it is detected that all the water propulsors 200 in the same group are in the linkage mode, displaying an association identifier between the multiple third identification elements respectively corresponding to all the water propulsors 200 in the group. For example, the third identification element is used to identify the current trimming angle of the water propulsor 200, and an alignment line, a connecting line, or other alignment identifiers can be displayed between the third identification elements, so that the user can intuitively perceive that these water propulsors 200 are in the linkage state and their current trimming angles are consistent.

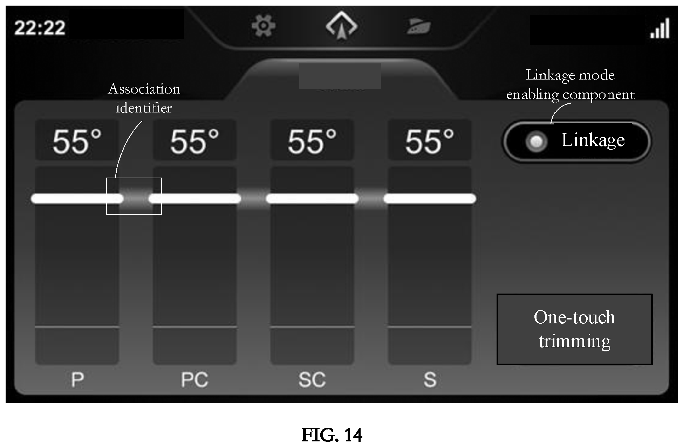

For example, as shown in Fig. 14, the four water propulsors 200 in the figure are in the linkage mode, and their current trimming angles are all 55°. Therefore, the association identifier (such as the line in the figure) can be displayed between the identification lines for identifying the current trimming angle in the level interval elements of each two water propulsors 200. These water propulsors 200 are associated through the association identifier, so that based on the association identifier, the user can intuitively know that these water propulsors 200 are currently in the linkage state.

In some embodiments, to facilitate the user to enable the linkage mode, the display device 300 may display a linkage mode enabling component. The control method includes: when detecting that the user touches the linkage mode enabling component, the linkage mode can be enabled. Of course, before enabling the linkage mode, the user can first group the water propulsors 200. For example, the user can check the multiple water propulsors 200 that need to be controlled in linkage in the display interface of the display device 300, and after completing the check, touch the linkage mode enabling component to set the checked multiple water propulsors 200 to the linkage mode. As shown in Fig. 14, the linkage mode enabling component with a "linkage" identifier can be displayed in the display interface. The component includes a selection box. After the user selects the selection box, the linkage mode can be enabled. If the user does not select the selection box, it is in an individual control mode.

Of course, in practical disclosure scenarios, the user can also enable the linkage mode through other control components other than the display device 300. For example, for some existing physical buttons, the function of enabling the linkage mode can also be integrated into them. To distinguish from their existing functions, different control instructions can be sent by changing the press duration or pressing mode of these physical buttons. For example, each water propulsor 200 includes a trimming button, and when the user presses the trimming button, the water propulsor 200 can be controlled to trim. To facilitate enabling the linkage mode, the function of enabling the linkage mode can also be integrated into the trimming button. When the user presses the trimming button for a short time, the water propulsor 200 can be controlled to trim. When the duration of the user pressing the trimming button exceeds a preset duration, the linkage mode is enabled.

In some embodiments, for two water propulsors 200 in the individual control mode (that is, not in the linkage mode), the user can also drag the respective level adjustment components of the two water propulsors 200 to move within their respective level interval elements simultaneously to set the trimming angles of the two water propulsors 200 simultaneously. For example, the user can use the left hand to drag the gear adjustment component of one of the water propulsors 200 to move within its level interval element to drag the level adjustment component to the position of 36°, and at the same time, the user can use the right hand to drag the level adjustment component of the other water propulsor 200 to move within its level interval element to drag the level adjustment component to the position of 40°. That is, for the scenario of individual control, the trimming angles of different water propulsors 200 can also be set simultaneously, which improves the control efficiency.

For safety reasons, when the operating parameters of the water propulsor 200 are different, the adjustable range of its trimming angle is also inconsistent. For example, when the power of the water propulsor 200 is relatively large, such as greater than 20KW, the trimming angle of the water propulsor 200 usually cannot be too large (for example, not exceeding 12°). If the trimming angle is too large, safety accidents such as capsizing are likely to occur. In some embodiments, when the speed of the water propulsor 200 is too high, its trimming angle cannot be set too large. To ensure the safety of the water propulsor 200 during operation, the control method further includes: detecting the operating parameters of the water propulsor 200, and adjusting the setting authority of the trimming angle setting component according to the operating parameters. For example, adjusting the adjustable range of the trimming angle that can be set by the trimming angle setting component, so as to avoid potential safety hazards of the water propulsor 200 caused by the user setting the trimming angle too large or too small.

The operating parameters may be the power, speed, etc. of the water propulsor 200. The power of the water propulsor 200 can be calculated based on the throttle position, and the speed of the water propulsor 200 can be calculated based on a position data collected by a GPS positioning device, for example.

In some embodiments, when the operating parameter of the water propulsor 200 does not exceed a preset threshold, the adjustable range of the trimming angle that can be set by the trimming angle setting component is limited to a first preset angle range. When the operating parameter exceeds the preset threshold, the adjustable range of the trimming angle that can be set by the trimming angle setting component is limited to a second preset angle range, where the maximum value of the second preset angle range is less than the maximum value of the first preset angle range. The preset threshold, the first preset angle range, and the second preset angle range can all be flexibly set based on the performance of the water propulsor 200. Taking the operating parameter as power as an example, when the power is greater than 20KW, the trimming angle of the water propulsor 200 usually cannot exceed 12°. Therefore, at this time, the second preset angle range can be set to -4°~12°. When the power is less than 20KW, the trimming angle of the water propulsor 200 can be freely adjusted within -4°~60°. Therefore, at this time, the first preset angle range can be set to -4°~60°.

The determination of whether the operating parameter of the water propulsor 200 exceeds the preset threshold can be completed by the water propulsor 200, and then the determination result is sent to the display device 300. In some embodiments, the display device 300 can also obtain the operating parameter from the water propulsor 200 and then complete the above determination process.

By setting the angle level adjustment component in the display device 300, the angle level adjustment component includes the level interval element and the level adjustment element that can move within the level interval element to adjust the trimming angle, so that the user can set the target trimming angle by dragging the level adjustment element to move within the level interval element, which provides great convenience for the user to set the trimming angle. However, this way of setting the trimming angle also has some problems. For example, the trimming device 220 of the water propulsor 200 usually has a limit angle (for example, 60°). Beyond this limit angle, mechanical limit will be performed on the trimming device 220. When the trimming angle is equal to or greater than the limit angle, the water propulsor 200 is in a limit state. When releasing the mechanical limit, the trimming angle of the water propulsor 200 usually increases by a certain angle first, and then gradually decreases after the mechanical limit is released. For example, assuming that the water propulsor 200 is currently in the limit state, that is, the current trimming angle is 60°, if the user sends the trimming instruction with the target trimming angle of 50°, at this time, the trimming angle of the water propulsor 200 usually increases first, for example, to 65°, so that the mechanical limit can be released, and then gradually decreases to 50°.

Since there are many control components that can control the trimming of the water propulsor 200, such as the display device 300, the trimming button on the water propulsor 200, the trimming button on the remote control box, etc., these control components can all send trimming instructions to the trimming device 220 and release the limit state. For scenarios where the user issues the trimming instruction to release the limit state through control components such as the trimming button on the water propulsor 200 or the trimming button on the remote control box, even if the trimming angle needs to increase first and then decrease, and it takes a certain time to release the limit state, the user cannot clearly perceive it. However, for scenarios where the user issues the trimming instruction to release the limit state by dragging the level adjustment element on the display device 300, since the display device 300 will real-time display the animation of the current trimming state during the trimming process, the user can perceive that the trimming angle does not directly change to the angle set by the user, but increases first and then decreases, and the level adjustment component does not directly move to the position of the target trimming angle, which is obviously not in line with the functional requirements of the product and the user's intuition.

In addition, for the scenario where the water propulsor 200 is in the limit state, if the limit state can be released by directly dragging the level adjustment element, it is also easy for the user to accidentally touch the level adjustment element in the display device 300, resulting in the release of the limit state, which will bring certain potential safety hazards.

To avoid the above problems, when it is detected that the water propulsor 200 is in the limit state, the level adjustment element can be controlled to be in a locked state, that is, the user cannot drag the level adjustment element to move to set the trimming angle. Therefore, in some embodiments, if the trimming angle setting component includes the angle level adjustment component, and the angle level adjustment component includes the level interval element and the level adjustment element that can move within the level interval element to adjust the trimming angle, the operating parameter may be the current trimming angle of the water propulsor 200. The step of adjusting the setting authority of the trimming angle setting component based on the operating parameter includes: real-time detecting the current trimming angle, and determining whether the water propulsor 200 is in the limit state based on the current trimming angle. If yes, controlling the level adjustment element to be in the locked state. When the level adjustment element is in the locked state, the user cannot drag the level adjustment element to move within the level interval element.

In some embodiments, when the level adjustment element is in the locked state, the level adjustment element cannot be used to set the trimming angle, but the level adjustment element can move within the level interval element based on the real-time trimming angle of the trimming device 220 to dynamically display the real-time trimming state of the trimming device 220.

In some embodiments, to allow the user to more intuitively know whether the level adjustment element is in the locked state, the level adjustment element can be set to different colors to distinguish between the locked state and the unlocked state. For example, when the level adjustment element is in an unlocked state, it can be set to blue, and when it is in a locked state, it can be set to gray. In some embodiments, a lock identifier can be added to help the user intuitively know whether the level adjustment element is in a locked state. For example, when the level adjustment element is in a locked state, a lock identifier is added at or around the level adjustment element, and when the level adjustment element is in a locked state, the lock identifier is not displayed.

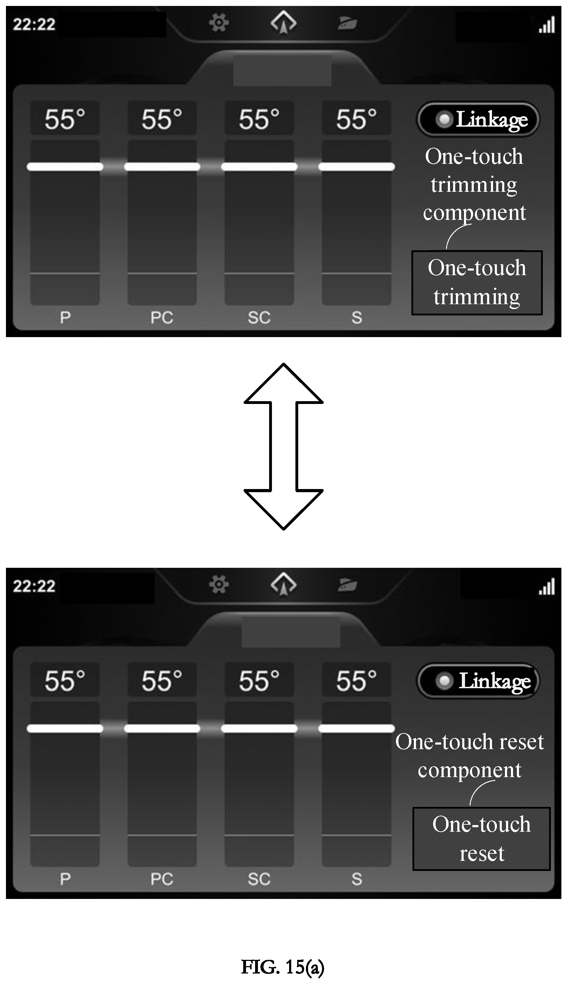

Generally, in scenarios such as the watercraft 10 berthing at the shore and mooring, the water propulsor 200 needs to be trimmed to the limit angle so that the underwater part of the water propulsor 200 can be trimmed out of the water to avoid corrosion or collision when not in use for a long time. To facilitate trimming control in such scenarios, in some embodiments, the trimming angle setting component may include a one-touch trimming component. As shown in Fig. 15(a), the interactive operation may be an operation of the user clicking the one-touch trimming component, where the target trimming angle corresponding to the one-touch trimming component is the limit angle. By directly clicking the one-touch trimming component, the water propulsor 200 can be automatically controlled to trim to the limit angle, so that it is not necessary to continuously touch the trimming control-related components until the trimming device 220 reaches the limit state, which is more convenient and faster.

Similarly, after the user docks the watercraft 10, if the user wants to reuse the watercraft 10, the user needs to lower the propeller of the water propulsor 200 to the underwater again to provide power for the watercraft 10. In this scenario, the user needs to adjust the trimming angle of the water propulsor 200 to the limit release angle to adjust the trimming angle. To facilitate the user to adjust the trimming angle to the limit release angle, in some embodiments, the trimming angle setting component may further include a one-touch reset component. As shown in Fig. 15(a), the target trimming angle corresponding to the one-touch reset component is the limit release angle. After the user touches the one-touch reset component, the water propulsor 200 can be automatically controlled to trim to the limit release angle. By directly clicking the one-touch trimming component, the water propulsor 200 can be automatically controlled to trim to the limit release angle, so that it is not necessary to continuously touch the trimming control-related components until the trimming device 220 reaches the limit release state, which is more convenient and faster.

The limit release angle may be the minimum trimming angle of the water propulsor 200, such as 0°, -4°, etc. The limit release angle may also be the boundary angle between the locked section and the unlocked section of the trimming device 220, or the limit release angle may also be the boundary angle between the unlocked section and the free control section, etc., which can be flexibly set based on actual needs.

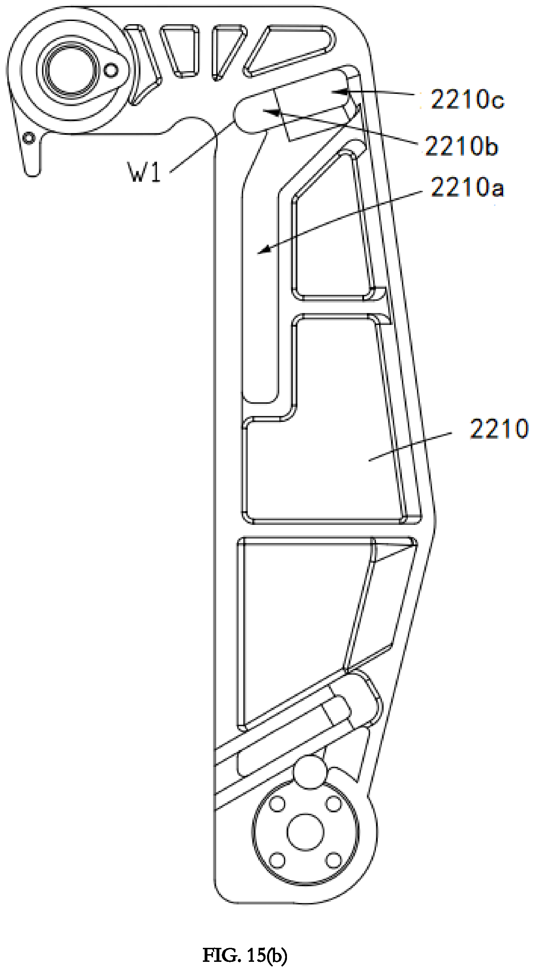

As an example, as shown in Fig. 15(b), which is a schematic structural diagram of the clamp 2210 in the trimming device 220. The sliding groove in the clamp 2210 includes a free control section 2210a, a locked section 2210b, and an unlocked section 2210c. The groove depth of the free control section 2210a is less than the groove depth of the locked section 2210b, and the groove depth of the locked section 2210b is less than the groove depth of the unlocked section 2210c. One end of the locked section 2210b is set as a locking position W1, and the other end of the locked section 2210b is connected to the unlocked section 2210c, so that the limit shaft (not shown in the figure) in the trimming device 220 exits the locking position W1 and enters the unlocked section 2210c under the action of the driving force. When the trimming device 220 trims under the action of the driving force, the limit shaft of the trimming device 220 enters the locked section 2210b from the free control section 2210a, and since the groove depth of the free control section 2210a is less than the groove depth of the locked section 2210b, the end of the limit shaft moves toward the bottom of the sliding groove along its axial direction, and the end of the limit shaft always abuts against the bottom of the sliding groove, so that the limit shaft cannot move from the locked section 2210b to the free control section 2210a. Thus, after the driving force is removed, the trimming device 220 makes the limit shaft move to the locking position W1 along the free control section 2210a under the action of its own gravity and then locks, so that the trimming device 220 can still maintain the trimming state after the load is released, that is, it is in the limit state at this time.

At the same time, the unlocked section 2210c is connected to the higher end of the locked section 2210b. When the trimming device 220 needs to be unlocked, the trimming device 220 continues to trim under the action of a driving force, so that the limit shaft exits from the locking position W1 and moves to the unlocked section 2210c. Since the groove depth of the locked section 2210b is less than the groove depth of the unlocked section 2210c, the end of the limit shaft moves toward the bottom of the sliding groove along its axial direction, and the end of the limit shaft always abuts against the bottom of the sliding groove, so that the limit shaft cannot move from the unlocked section 2210c to the locked section 2210b, and the limit shaft collides with the bottom of the unlocked section 2210c to make a collision sound, thereby reminding the outside that the unlocking action has been completed. Thus, after the unlocking action is completed, the driving force is removed, and the trimming device 220 makes the limit shaft move from the unlocked section 2210c to the free control section 2210a under the action of its own gravity, and continues to slide down along the free control section 2210a to complete the release action, that is, the limit state is released at this time. After the limit shaft is released from the limit, it can slide freely up and down in the free control section 2210a.

Based on the embodiment shown in Fig. 15(b), the limit release angle can be understood as the trimming angle corresponding to the trimming device 220 when the limit shaft is located at the boundary between the locked section and the unlocked section; or, the limit release angle can be understood as the trimming angle corresponding to the trimming device 220 when the limit shaft is located at the boundary between the unlocked section and the free control section.

In some embodiments, considering that after the user trims the water propulsor 200 to the limit angle by using the one-touch trimming component, the user's subsequent operation is likely to trim the water propulsor 200 to the limit release angle for subsequent use. Therefore, the control method further includes: after the trimming device 220 trims to the limit angle, the one-touch trimming component can be switched to the one-touch reset component. For example, as shown in Fig. 15(a), the one-touch trimming component and the one-touch reset component are mutually exclusive. After the user clicks the one-touch trimming component and the water propulsor 200 trims to the limit angle, the one-touch trimming component in the display interface can be switched to the one-touch reset component. The display device 300 can adaptively display components that the user may need in the current state to the user according to the current state of the trimming device 220, which can optimize the component configuration in the interface, facilitate the user to identify the positions of each component, and also facilitate the user's interaction with each component.

Of course, considering that when the power and speed of the water propulsor 200 are too high, its trimming angle cannot be too large, otherwise safety accidents are likely to occur. Therefore, the one-touch trimming component is not in an active state (i.e., usable state) at all times. Therefore, in some embodiments, the control method further includes: real-time detecting the operating parameters of the water propulsor 200, and if the operating parameters meet preset conditions, controlling the one-touch trimming component to be in an inactive state. The preset conditions may be any one of the power of the water propulsor 200 being greater than the preset power and the moving speed of the water propulsor 200 being greater than the preset speed.

In some embodiments, if there are multiple water propulsors 200, when the multiple water propulsors 200 are in the linkage mode, to facilitate the synchronous adjustment of the trimming angles of the multiple water propulsors 200, the one-touch trimming component can also be used to control the multiple water propulsors 200 in the linkage mode to trim to the limit angle synchronously. Since the current trimming angles of the multiple water propulsors 200 need to be consistent when synchronously adjusting the multiple water propulsors 200, when it is determined that the multiple water propulsors 200 are in the linkage mode, it can be further determined whether the current trimming angles of the multiple water propulsors 200 are consistent. If not, the one-touch trimming component can be controlled to be in the inactive state, that is, the operation of synchronously trimming the multiple water propulsors 200 to the limit angle cannot be performed at this time.

To facilitate the user to distinguish the current state of the one-touch trimming component, the one-touch trimming component can be set to different colors when it is in the usable state and the inactive state.

In some embodiments, when the one-touch trimming component is in the inactive state, the control method further includes: if it is detected that the user clicks the one-touch trimming component, prompt information can be displayed on the display device 300 to prompt the reason why the one-touch trimming component is in the inactive state. For example, the prompt information may be that the current operating parameters (speed or power) of the water propulsor 200 are too high, or the prompt information may be that the current trimming angles of the multiple water propulsors 200 in the linkage mode are not aligned.

In some embodiments, as shown in Fig. 15(a), in response to the user's operation of clicking the one-touch reset component, after the trimming device 220 is trimmed to the above-mentioned limit release angle, considering that the user's next operation is likely to trim the trimming device 220 to the limit angle, the one-touch reset component can be switched to the one-touch trimming component. That is, the control method may further include: after the trimming device 220 trims to the limit release angle, switching the one-touch reset component to the one-touch trimming component.

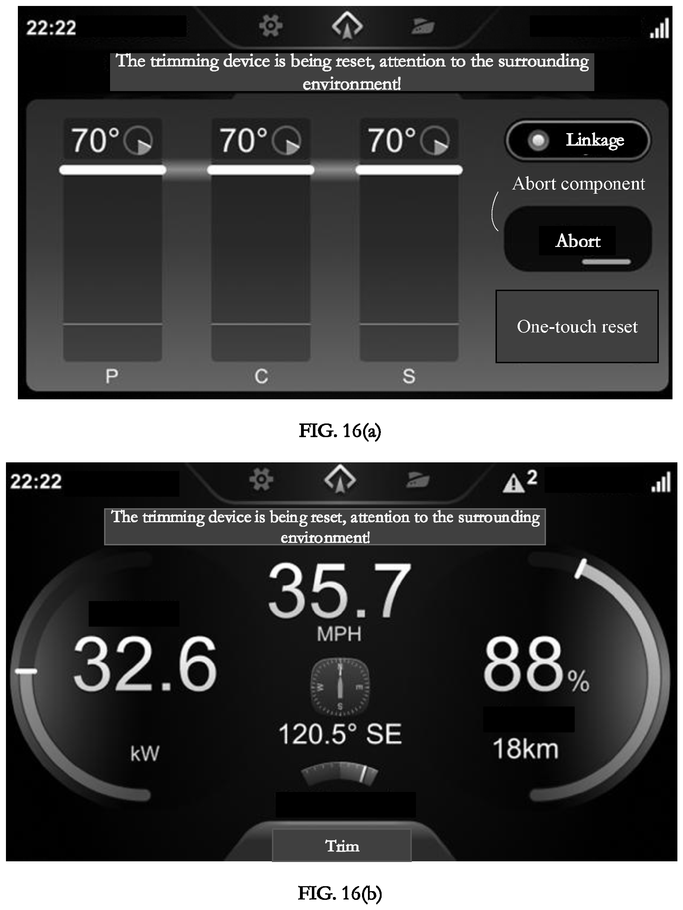

In some embodiments, considering that after the user touches the one-touch reset component, it is necessary to trim components such as the propeller of the water propulsor 200 from above the water surface to underwater. At this time, there may be a problem that underwater obstacles collide with components such as the propeller, causing damage to the water propulsor 200. To avoid the above problem, the control method further includes: if it is detected that the user touches the one-touch reset component, reset prompt information can be displayed. The prompt information can be used to prompt the user that the trimming angle of the water propulsor 200 is being trimmed to the limit release angle at this time, so that the user can check whether there are obstacles in the water area around the water propulsor 200. As shown in Fig. 16(a), reset prompt information can be displayed in the interface.

In some embodiments, the steps of detecting the user's operation of touching the one-touch reset component and displaying the reset prompt information include: receiving environmental information detected and sent by the water propulsor 200 to be reset, generating prompt information based on the environmental information, and displaying the prompt information. For example, a sensor (such as a binocular camera, radar, etc.) may be provided on the water propulsor 200, and the surrounding environmental information is collected by the sensor, and then prompt information is generated based on the environmental information. For example, if it is detected that there is an obstacle in the water area near the water propulsor 200 that may collide with the water propulsor 200, a prompt such as "Obstacle nearby, danger!" can be given.

In some embodiments, the display duration of the prompt information can be determined based on the reset duration of the trimming device 220. For example, the prompt information can be displayed on the display device 300 during the entire reset process of the trimming device 220 until the reset is completed.

In some embodiments, the one-touch reset component is displayed on the trimming interface, and the step of displaying the reset prompt information in response to the user's operation of touching the one-touch reset component includes: if an instruction to return to the main interface input by the user is detected during the display of the prompt information, the trimming interface can be exited and returned to the main interface. At this time, if the trimming device 220 has not yet trimmed to the limit release angle, the prompt information can continue to be displayed in the main interface until the trimming device 220 trims to the limit release angle. By continuing to display the prompt information in the main interface after the user exits the trimming interface, the user can be continuously prompted during the reset process, and the safety during the reset process is improved.

As shown in Fig. 16(b), if an instruction to return to the main interface input by the user is detected during the display of the prompt information, the trimming interface can be exited and returned to the main interface, and the prompt information can continue to be displayed in the main interface.

In some embodiments, the trimming angle setting component is displayed on the trimming interface, and the control method further includes: if no interactive operation of the user in the trimming interface is detected within a first preset duration, it indicates that the user does not need to set the trimming angle at this time, and thus can automatically return to the main interface. The main interface displays information of higher concern to the user, such as the power and speed of the water propulsor 200. In this embodiment, the display device 300 automatically returns to the main interface without the user operating to return to the main interface, which is more convenient and provides a better user experience.

In some embodiments, changes in the trimming interface can also be real-time detected, and the control method further includes: if no change in the trimming angle of the trimming device 220 displayed in the trimming interface is detected within a second preset duration, it indicates that the trimming device 220 is not being controlled currently, and thus can return to the main interface. The main interface displays information of higher concern to the user, such as the power and speed of the water propulsor 200. In this embodiment, the display device 300 automatically returns to the main interface without the user operating to return to the main interface, which is more convenient and provides a better user experience.

In some embodiments, an orientation display component, such as an instrument panel, is further displayed in the main interface. The orientation display component is used to indicate the orientation of the watercraft 10 where the water propulsor 200 is located. The orientation display component includes a watch body and a pointer, and the orientation indicated by the pointer is the current orientation of the watercraft 10. The control method may further include: when the orientation of the watercraft 10 changes, the watch body can be controlled to rotate relative to the pointer, so that the pointer points to the changed orientation.

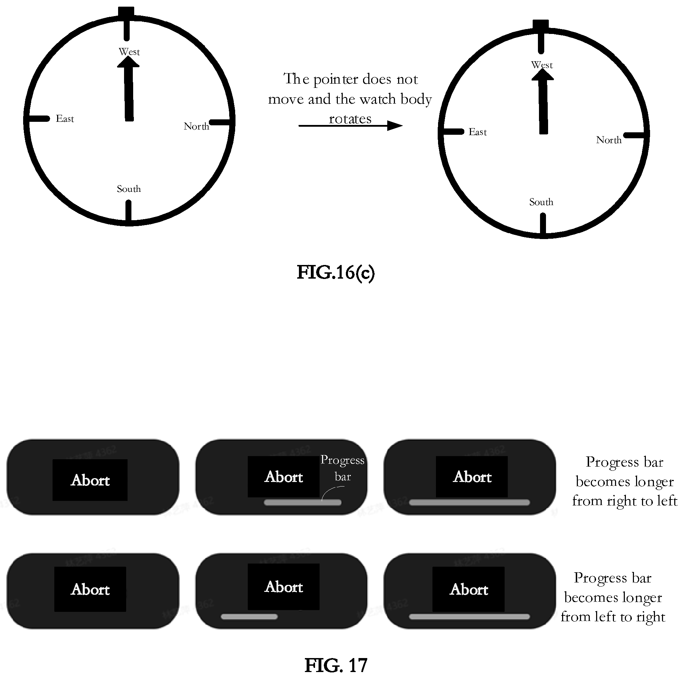

As shown in Fig. 16(c), the orientation display component is an instrument panel. Assuming that the initial orientation of the watercraft 10 is north, as shown in the left figure, the pointer points to north. After its orientation changes to east, at this time, the pointer of the instrument panel can be controlled to remain stationary, and the watch body rotates, so that the pointer points to east. More specifically, the orientation of the pointer may be consistent with the direction from the stern to the bow of the watercraft 10. Since the pointer indicating the orientation remains stationary, the user does not need to move their line of sight when reading, which makes it more convenient for the user to read from the instrument panel.

In some embodiments, a propeller setting component is further displayed in the main interface of the display device 300. The control method may further include: after detecting an operation of the user setting the propeller type of the water propulsor 200 through the propeller setting component, sending the propeller type set by the user to the water propulsor 200, so that the water propulsor 200 determines its own working mode based on the received propeller type. The propeller types of the water propulsor 200 include positive propellers and reverse propellers. When the motor of the water propulsor 200 is connected to different types of propellers, its rotation direction is also different. For example, when the motor is connected to a positive propeller, the motor can rotate clockwise, and when the motor is connected to a reverse propeller, the motor can rotate counterclockwise. In this embodiment, the rotation direction of the motor during operation can be determined based on the propeller type set by the user, and the user does not need to distinguish the propeller type by themselves and then separately control the rotation direction of the corresponding motor, which is more convenient.

In some embodiments, during the trimming process of the trimming device 220, to facilitate the user to stop the trimming of the trimming device 220 at any time, the display device 300 may further display an abort component. During the process of the trimming device 220 trimming to the target trimming angle, the control method further includes: if an operation of the user touching the abort component is detected, a trimming abort instruction can be sent to the trimming device 220 to abort the trimming action of the trimming device 220. For example, as shown in Fig. 16(a), after sending a trimming instruction to the trimming device 220, an abort component can be displayed in the display interface, and the user can abort the trimming action of the trimming device 220 by touching the abort component.

In some embodiments, the trimming angle setting component includes one or more of a one-touch trimming component and a one-touch reset component. The control solution may further include: after detecting an operation of the user touching the one-touch trimming component or the one-touch reset component, the abort component can be displayed in the display device 300, so that the user can abort the trimming of the trimming device 220 through the abort component.

In some embodiments, during the automatic trimming process of the trimming device 220, a progress bar can be displayed around the abort component, and the progress bar is used to indicate the current progress of the automatic trimming process. The control method may further include: after detecting the end of the automatic trimming process, stopping the display of the progress bar and the abort component. The progress bar may present various shapes, such as a strip shape and an arc shape, and the progress bar may continuously change to dynamically display the current progress of the automatic trimming process. For example, after the user sends a trimming instruction through the one-touch trimming component, the one-touch reset component, other components for sending trimming instructions, or control components, the trimming device 220 can trim automatically. During this process, a progress bar can be displayed around the abort component, and the progress bar can indicate the current progress of the automatic trimming.

In some embodiments, the progress bar includes a multiple change directions, and the multiple change directions may correspond to the multiple trimming directions of the trimming device 220. For example, the progress bar may be strip-shaped, and the strip-shaped progress bar may continuously become longer to indicate the current trimming progress. The longer the progress bar, the closer it is to the target trimming angle. For example, the direction in which the progress bar becomes longer may be from left to right or from right to left, where becoming longer from left to right represents that the trimming direction of the trimming device 220 is upward trimming, and becoming longer from right to left represents that the trimming direction of the trimming device 220 is downward trimming.

For example, as shown in Fig. 17, which is a schematic diagram of the abort component. A strip-shaped progress bar can be displayed below the abort component to identify the current progress of the trimming process. For example, after the user touches the one-touch trimming component, the change direction of the progress bar of the abort component can be gradually lengthened from right to left. After the user touches the one-touch reset component, the change direction of the progress bar of the abort component can be gradually lengthened from left to right. When the progress bar ends, it indicates that the trimming process ends, and at this time, the abort component disappears from the display interface.

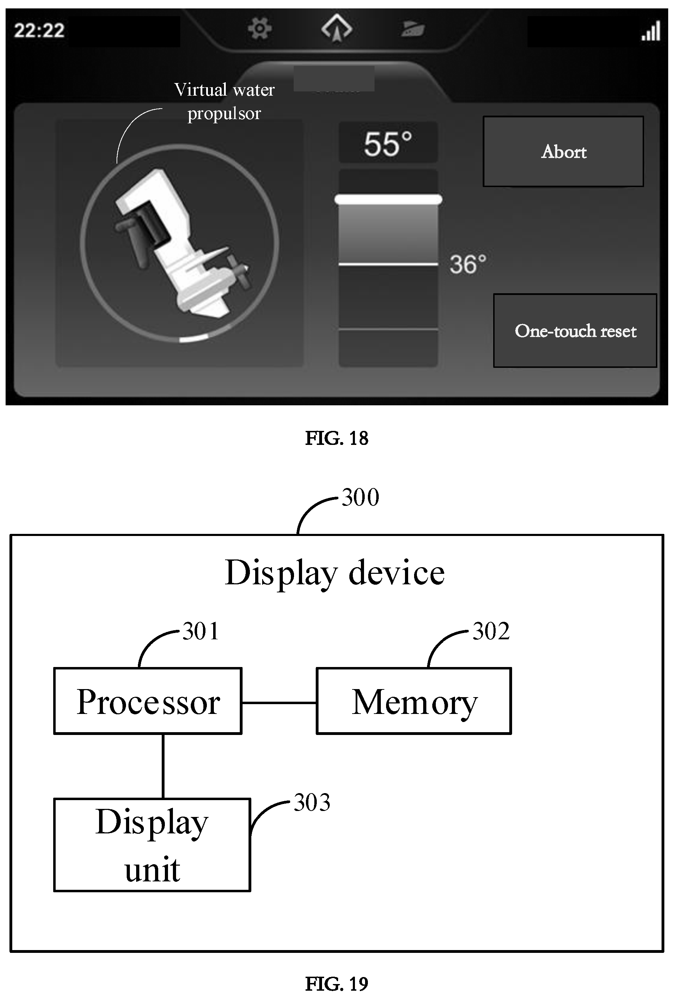

In some embodiments, to more vividly display the current real-time trimming state of the water propulsor 200, the trimming angle setting component can be displayed on the trimming interface, and a virtual water propulsor is simultaneously displayed on the trimming interface. That is, the step of displaying an animation of the real-time trimming state of the water propulsor 200 based on the real-time trimming angle may include: controlling the virtual water propulsor to trim based on the real-time trimming angle, so that the real-time trimming angle of the virtual water propulsor is consistent with the real-time trimming angle of the water propulsor 200. That is, the real-time trimming process of the real water propulsor 200 can be simulated through the virtual water propulsor displayed in the display device 300, so that the user can intuitively perceive the real-time trimming state of the real water propulsor 200 by viewing the trimming animation of the virtual water propulsor. As shown in Fig. 18, a corresponding virtual water propulsor can be displayed for each water propulsor 200, and during the trimming process of the water propulsor 200, the virtual water propulsor can synchronously display the trimming animation. Among them, in the trimming angle setting stage, during the process of the user dragging the level adjustment element to move within the level interval element to set the target trimming angle, the virtual water propulsor can also trim synchronously. In the trimming stage of the water propulsor 200, the virtual water propulsor can also synchronously display the trimming animation of the real water propulsor 200. The above two stages can also be distinguished by the color of the ring around the virtual water propulsor, or by the transparency of the virtual water propulsor, etc., which is not limited in the present disclosure.

The various technical features in the above embodiments can be arbitrarily combined as long as there is no conflict or contradiction between the combinations of features. Therefore, any combination of the various technical features in the above embodiments also falls within the scope of disclosure of this specification.

In addition, some embodiments of the present disclosure further provide a display device 300. As shown in Fig. 19, the display device 300 includes a processor 301, a memory 302, and a display unit 303. The display unit 303 is connected to the processor 301, a computer program is stored in the memory 302, and the processor 301 implements the control method introduced in any of the above embodiments when executing the computer program.

For the specific process of the display device 300 implementing the above control method, reference may be made to the description in the above method embodiments, which will not be repeated here.

In addition, some embodiments of the present disclosure further provide a water propulsion system 400. As shown in Fig. 3, the water propulsion system 400 includes the display device 300 introduced in the above embodiment and a water propulsor 200 communicatively connected to the display device 300.

For the process of the display device 300 in the water propulsion system 400 implementing the above control method, reference may be made to the description in the above method embodiments, which will not be repeated here.

In addition, some embodiments of the present disclosure further provide a watercraft 10. As shown in Fig. 3, the watercraft includes a movable body 100 and the water propulsion system 400 introduced in the above embodiment, and the water propulsion system 400 is disposed on the movable body 100.

For the process of the display device 300 in the water propulsion system 400 implementing the above control method, reference may be made to the description in the above method embodiments, which will not be repeated here.

The present disclosure further provides a non-transitory computer-readable storage medium. The non-transitory computer-readable storage medium stores computer instructions. When the computer instructions in the non-transitory computer-readable storage medium are executed by a processor, the control method described in any of the above embodiments can be implemented. The non-transitory computer-readable storage medium may be a ROM, a Random Access Memory (RAM), a CD-ROM, a magnetic tape, a floppy disk, an optical data storage device, or the like.

It should be noted that in this article, relational terms such as "first" and "second" are only used to distinguish one entity or operation from another entity or operation, and do not necessarily require or imply that there is any such actual relationship or order between these entities or operations. The terms "include," "comprise" or any other variant thereof are intended to cover a non-exclusive inclusion, so that a process, method, article or device including a series of elements not only includes those elements but also includes other elements not explicitly listed, or further includes elements inherent to such process, method, article or device. Without more restrictions, an element defined by the sentence "including a..." does not exclude the existence of other identical elements in the process, method, article or device including the element.

The methods and devices provided by the embodiments of the present disclosure have been described in detail above. Specific examples are used in this article to explain the principles and implementation methods of the present disclosure. The descriptions of the above embodiments are only used to help understand the methods and core ideas of the present disclosure; at the same time, for those of ordinary skill in the art, according to the ideas of the present disclosure, there will be changes in the specific implementation methods and disclosure scopes. In conclusion, the content of this specification should not be understood as limiting the present disclosure.

## Claims

1. A control method used for a display device, the display device is communicatively connected to a water propulsor, the water propulsor comprises a trimming device, and the control method comprises:
receiving an input to generate a trimming instruction, the trimming instruction carrying a target trimming angle;
sending the trimming instruction to the trimming device, to cause the trimming device to trim to the target trimming angle;
receiving a real-time trimming angle fed back by the trimming device during the process of trimming to the target trimming angle; and
displaying an animation of the real-time trimming state of the water propulsor based on the real-time trimming angle.

2. The control method of claim 1, the display device displays a trimming angle setting component, and the target trimming angle is set based on an interactive operation in the trimming angle setting component.

3. The control method of claim 2, the trimming angle setting component comprises an angle level adjustment component, the interactive operation comprises a click operation in the angle level adjustment component, and a trimming angle corresponding to a click position is the target trimming angle.

4. The control method of claim 3, further comprising:
in response to the click operation in the angle level adjustment component, displaying the trimming angle corresponding to the click position.

5. The control method of claim 2, the trimming angle setting component comprises an angle level adjustment component, the angle level adjustment component comprises a level interval element and a level adjustment element, the interactive operation comprises an operation of dragging the level adjustment element to move within the level interval element, and when the level adjustment element is released, the trimming angle corresponding to a current position of the level adjustment element is the target trimming angle.

6. The control method of claim 5, the angle level adjustment component comprises a first identification element, and the control method further comprises:
in response to the operation of the user dragging the level adjustment element to move within the level interval element, real-time displaying the first identification element identifying the current position of the level adjustment element.

7. The control method of claim 6, the angle level adjustment component comprises a second identification element; the control method further comprises:
displaying the second identification element identifying the position of the level adjustment element before the user drags the level adjustment element.

8. The control method of claims 5 to 7, the control method further comprises:
in response to the operation of the user releasing the level adjustment element, displaying the trimming angle corresponding to the current position of the level adjustment element.

9. The control method of claims 5 to 7, the control method further comprises:
in response to the operation of the user dragging the level adjustment element to move within the level interval element, real-time displaying the trimming angle corresponding to the current position of the level adjustment element.

10. The control method of claim 5, the angle level adjustment component further comprises a third identification element for identifying the current trimming angle of the water propulsor in the level interval element, and a fourth identification element for identifying the target trimming angle; the step of displaying an animation of the real-time trimming state of the water propulsor based on the real-time trimming angle comprises:
controlling the third identification element to move toward the fourth identification element based on the real-time trimming angle.

11. The control method of claim 10, the control method further comprises:
during the process of the user dragging the level adjustment element to move within the level interval element to set the target trimming angle, controlling the level interval element to present a first color;
the step of displaying an animation of the real-time trimming state of the water propulsor based on the real-time trimming angle further comprises:
during the process of the trimming device trimming to the target trimming angle, controlling the level interval element to present a second color, wherein the first color is different from the second color.

12. The control method of claim 2, further comprising at least one of the following:
the trimming angle setting component comprises an angle editing component, the interactive operation comprises an angle editing operation in the angle editing component, and the target trimming angle is set based on the angle editing operation; or
the trimming angle setting component comprises an angle selection component, the interactive operation comprises an angle selection operation in the angle selection component, and the target trimming angle is set based on the angle selection operation.

13. The control method of claim 12, the trimming angle setting component further comprises a level interval element, and the control method further comprises:
displaying an identifier corresponding to the target trimming angle that is set in the level interval element.

14. The control method of claim 3 or 13, the trimming angle setting component further comprises a third identification element for identifying the current trimming angle of the water propulsor in the level interval element, and a fourth identification element for identifying the target trimming angle; the step of displaying an animation of the real-time trimming state of the water propulsor based on the real-time trimming angle comprises:
controlling the third identification element to move toward the fourth identification element based on the real-time trimming angle.

15. The control method of claim 2, the water propulsor comprises a multiple water propulsors, the multiple water propulsors are configured to be divided into one or more groups, and when the multiple water propulsors in a same group are in a linkage mode, the trimming instruction acts on all the water propulsors in the group.

16. The control method of claim 15, each of the water propulsors corresponds to one of the trimming angle setting components, and for the multiple water propulsors in the same group, if the multiple water propulsors in the group are in the linkage mode, the target trimming angles of all the water propulsors in the group are configured to be set simultaneously based on the interactive operation between a user and the trimming angle setting component of any one of the water propulsors in the group.

17. The control method of claim 16, before the step of setting the target trimming angles of all the water propulsors in the group simultaneously based on the interactive operation between the user and the trimming angle setting component of any one of the water propulsors in the group, the control method further comprises:
if it is determined that the current trimming angles of any two water propulsors in the group are inconsistent, sending a trimming alignment instruction to the trimming devices of all the water propulsors in the group, so that the current trimming angles of all the water propulsors in the group are adjusted to the same angle.

18. The control method of claim 17, the step of sending the trimming alignment instruction to the trimming devices of all the water propulsors in the group comprises:
determining a reference angle of all the water propulsors in the group based on the interactive operation between the user and the trimming angle setting component of at least one of the water propulsors in the group;
sending the trimming alignment instruction to the trimming devices of at least some of the water propulsors in the group, to cause the trimming devices of all the water propulsors in the group trim to the reference angle, and the current trimming angles of the at least some of the water propulsors are not the reference angle.

19. The control method of claim 17, the display device displays a one-touch alignment button, and the step of sending the trimming alignment instruction to the water propulsors in the group comprises:
in response to an operation of the user clicking the one-touch alignment button, sending a trimming alignment instruction carrying a reference angle to the trimming devices of at least some of the water propulsors in the group, so that the trimming devices of all the water propulsors in the group trim to the reference angle, and the current trimming angles of the at least some of the water propulsors are not the reference angle.

20. The control method of claim 16, the trimming angle setting component comprises an angle level adjustment component, the angle level adjustment component comprises a level interval element and a level adjustment element, and the control method further comprises:
for the multiple water propulsors in the same group, during the process of the user dragging the level adjustment element of one of the water propulsors to move within the level interval element of the one of the water propulsors, if it is detected that the deviation between the trimming angle corresponding to the current position of the level adjustment element and the current trimming angle of any other water propulsor in the group is less than a preset deviation, displaying an alignment identifier between the level interval element of the one of the water propulsors and the level interval element of the any other water propulsor.

21. The control method of claim 15, each of the water propulsors corresponds to one of the trimming angle setting components, the trimming angle setting component comprises a level interval element and a third identification element for identifying the current trimming angle of the water propulsor in the level interval element; the step of displaying an animation of the real-time trimming state of the water propulsor based on the real-time trimming angle comprises:
if all the water propulsors in the same group are in the linkage mode, displaying an association identifier between the multiple third identification elements respectively corresponding to all the water propulsors in the group.

22. The control method of claims 15 to 21, the display device displays a linkage mode enabling component; the control method further comprises:
in response to the user touching the linkage mode enabling component, enabling the linkage mode.

23. The control method of claim 2, the control method further comprising:
detecting an operating parameter of the water propulsor;and
adjusting a setting authority of the trimming angle setting component based on the operating parameter.

24. The control method of claim 23, when the operating parameter does not exceed a preset threshold, an adjustable range of the trimming angle that can be set by the trimming angle setting component is limited to a first preset angle range;
when the operating parameter exceeds the preset threshold, the adjustable range of the trimming angle that can be set by the trimming angle setting component is limited to a second preset angle range, and a maximum value of the second preset angle range is less than a maximum value of the first preset angle range.

25. The control method of claim 23, the trimming angle setting component comprises an angle level adjustment component, the angle level adjustment component comprises a level interval element and a level adjustment element that can move within the level interval element to adjust the trimming angle, and the operating parameter comprises a current trimming angle of the water propulsor; the step of adjusting the setting authority of the trimming angle setting component based on the operating parameter comprises:
when it is determined that the water propulsor is in a limit state based on the current trimming angle, controlling the level adjustment element to be in a locked state.

26. The control method of claim 25, when the level adjustment element is in the locked state, the level adjustment element cannot be used to set the trimming angle, and the level adjustment element can move within the level interval element based on the real-time trimming angle of the trimming device.

27. The control method of claim 2, the trimming angle setting component comprises a one-touch trimming component, the interactive operation comprises an operation of clicking the one-touch trimming component, and a target trimming angle corresponding to the one-touch trimming component is a limit angle.

28. The control method of claim 27, the trimming angle setting component further comprises a one-touch reset component, and the control method further comprises:
after the trimming device trims to the limit angle, switching the one-touch trimming component to the one-touch reset component, wherein a target trimming angle corresponding to the one-touch reset component is a limit release angle.

29. The control method of claim 27, the control method further comprises:
if an operating parameter of the water propulsor meets a preset condition, controlling the one-touch trimming component to be in an inactive state;
the preset condition comprises any one of the power of the water propulsor being greater than a preset power and the moving speed of the water propulsor being greater than a preset speed.

30. The control method of claim 2, the trimming angle setting component comprises a one-touch reset component, the interactive operation comprises an operation of touching the one-touch reset component, and a target trimming angle corresponding to the one-touch reset component is a limit release angle.

31. The control method of claim 30, the control method further comprises:
after the trimming device trims to the limit release angle, switching the one-touch reset component to a one-touch trimming component, wherein a target trimming angle corresponding to the one-touch trimming component is a limit angle.

32. The control method of claim 30, the control method further comprises:
in response to touching the one-touch reset component, displaying reset prompt information.

33. The control method of claim 32, the step of displaying the reset prompt information in response to the user touching the one-touch reset component comprises:
receiving environmental information detected and sent by the water propulsor to be reset;
generating the prompt information based on the environmental information;
displaying the prompt information.

34. The control method of claim 32, a display duration of the prompt information is determined based on a reset duration of the trimming device.

35. The control method of claim 34, the one-touch reset component is displayed on a trimming interface; the step of displaying the reset prompt information in response to the user touching the one-touch reset component comprises:
during the display of the prompt information, if an instruction to return to a main interface is responded to and the trimming interface is exited, and the trimming device has not yet trimed to the limit release angle, continuing to display the prompt information in the main interface until the trimming device trims to the limit release angle.

36. The control method of claim 2, the trimming angle setting component is displayed on a trimming interface, and the control method further comprises at least one of the following:
when no interactive operation in the trimming interface is detected within a first preset duration, returning to a main interface; or
when no change in the trimming angle of the trimming device displayed in the trimming interface is detected within a second preset duration, returning to the main interface.

37. The control method of claim 35 or 36, an orientation display component for indicating an orientation of a water movable equipment where the water propulsor is located is displayed in the main interface, and the orientation display component comprises a watch body and a pointer; the control method further comprises:
when the orientation of the water movable equipment changes, controlling the watch body to rotate relative to the pointer, so that the pointer points to the changed orientation.

38. The control method of claim 35 or 36, a propeller setting component is displayed in the main interface; the control method further comprises:
in response to an operation of the user setting the water propulsor through the propeller setting component, sending a propeller type set by the user to the water propulsor, so that the water propulsor determines its own working mode based on the received propeller type.

39. The control method of claim 1, the display device displays an abort component; and the control method further comprises:
during the process of the trimming device trimming to the target trimming angle, in response to an operation of touching the abort component, sending a trimming abort instruction to the trimming device to abort a trimming action of the trimming device.

40. The control method of claim 39, the display device displays a trimming angle setting component, the trimming angle setting component comprises a one-touch trimming component and/or a one-touch reset component, and the control method further comprises:
in response to touching the one-touch trimming component or the one-touch reset component, displaying the abort component.

41. The control method of claim 40, the control method further comprises:
during an automatic trimming process of the trimming device, displaying a progress bar around the abort component, the progress bar being used to indicate a current progress of the automatic trimming;
in response to the end of the automatic trimming, stopping the display of the progress bar and the abort component.

42. The method of claim 41, the progress bar comprises a multiple change directions, and the multiple change directions correspond to a multiple trimming directions of the trimming device.

43. The control method of claim 2, the trimming angle setting component is displayed on a trimming interface, a virtual water propulsor is displayed on the trimming interface, and the step of displaying an animation of the real-time trimming state of the water propulsor based on the real-time trimming angle comprises:
controlling the virtual water propulsor to trim based on the real-time trimming angle, so that the real-time trimming angle of the virtual water propulsor is consistent with the real-time trimming angle of the water propulsor.

44. A display device, the display device comprises a processor, a memory, and a display unit, the display unit is connected to the processor, a computer program is stored in the memory, and the processor implements the control method according to any one of claims 1-43 when executing the computer program.

45. A water propulsion system, the propulsion system comprises the display device of claim 44 and the water propulsor communicatively connected to the display device.

46. A watercraft, the watercraft comprises a movable body and the water propulsion system of claim 41, and the water propulsion system is disposed on the movable body.

47. A computer-readable storage medium, a computer program is stored in the computer-readable storage medium, and the computer program implements the control method of claims 1-43 when executed by a processor.
